# EUROPEAN PATENT APPLICATION

(11) **EP 2 543 940 A1**
(43) Date of publication of application: **09.01.2013**
(21) Application number: 10846978.4
(22) Date of filing: 02.03.2010
(51) Int. Cl.: F25B 29/00, F24H 1/00, F25B 1/00

(54) **AIR-CONDITIONING HOT-WATER-SUPPLYING SYSTEM**

(71) Applicant: Hitachi, Ltd., Chiyoda-ku Tokyo 100-8280 (JP)
(72) Inventor: KOMATSU, Tomohiro, Tokyo 100-8220 (JP); KOTANI, Masanao, Tokyo 100-8220 (JP); UCHIDA, Mari, Tokyo 100-8220 (JP); KOKUGAN, Yoko, Tokyo 100-8220 (JP)
(74) Representative: Beetz & Partner
(86) International application number: PCT/JP2010/053312
(87) International publication number: WO 2011/108073

(57) **Abstract**

[Problem]

To improve efficiency as the whole of an air conditioning/hot-water supply system.

[Solving Means]

The present invention includes hot-water supply assisting means (80) for using heat occurred in heating operation in hot-water supply operation. A control device (1a) includes: means (S10) that estimates a current air conditioning load; means (S11) that estimates a current air conditioning power consumption; means (S12) that estimates a current hot-water supply load; means (S13) that estimates a current hot-water supply power consumption; means (S16) that tentatively determines the estimated air conditioning load; means (S18) that calculates a new air conditioning load by adding a predetermined value to the tentatively determined air conditioning load; means (S18) that calculates an air conditioning power consumption based on the new air conditioning load; means (S19) that calculates a hot-water supply load based on the new air conditioning load; means (S20) that calculates a hot-water supply power consumption based on the new hot-water supply load; means (S22) that compares a total power consumption; and assist control means that controls action of the hot-water supply assisting means to approximate the new air conditioning load when the total power consumption is smaller (Yes at S22).

## Description

### TECHNICAL FIELD

The present invention relates to an air conditioning/hot-water supply system that performs air conditioning and hot-water supply, and in particular relates to an air conditioning/hot-water supply system that performs control on operation according to an air conditioning load and a hot-water supply load.

### BACKGROUND ART

For example, Patent Literatures 1 and 2 disclose techniques of air conditioning/hot-water supply systems that perform air conditioning and hot-water supply. Patent Literature 1 discloses the air conditioning/hot-water supply system in which a cycle that allows air conditioning and hot-water supply is configured by connecting a heating heat exchanger and a hot-water supply heat exchanger switchably in series/in parallel with a compressor outlet of a heat pump cycle. According to this system, an amount of heat radiation to a hot-water supply side is made to increase when a heating load is small so that effective use of thermal energy can be achieved.

Also, Patent Literature 2 discloses a configuration that, in a refrigerator in which a dual refrigerating cycle using at least two levels of temperature is mounted, an air duct is formed such that further heat exchange between a condenser of a low-temperature side cycle and an evaporator of a high-temperature side cycle becomes possible, and further ventilation of cold air through the evaporator of the high-temperature side cycle and an evaporator of the low-temperature side cycle becomes possible. With this configuration, cooling rate when set temperature in the refrigerator is switched to be lower can be improved.

### CITATION LIST

### PATENT LITERATURE

PATENT LITERATURE 1: JP-A No. 2004-218921
PATENT LITERATURE 2: JP-A No. 2008-116100

### SUMMARY OF INVENTION

### TECHNICAL PROBLEM

Meanwhile, hot water temperature used in heating is 30 to 50°C, and hot-water supply temperature is 65 to 90°C, generally. Accordingly, it is necessary to generate hot water with different levels of temperature to perform heating and hot-water supply. Here, in the conventional technique described in Patent Literature 1, it cannot be actually said that efficiency as the whole of the system is good because hot water with different levels of temperature has to be generated with a single compressor.

Also, in the conventional technique described in Patent Literature 2, because a heat radiating part of the low-temperature cycle is connected thermally only to a heat absorbing part of the high-temperature cycle, a destination to which heat is radiated from the low-temperature cycle is limited to the high-temperature cycle. Accordingly, delivery of heat according to a balance of loads on the low-temperature cycle and the high-temperature cycle cannot be performed, and there is actually plenty of room for improvement of efficiency as the whole of the system.

The present invention has been made in view of the above-described actual situations, and an object thereof is to provide an air conditioning/hot-water supply system that can improve efficiency as the whole of the system when heating and hot-water supply are performed. Furthermore, another object of the present invention is to provide an air conditioning/hot-water supply system in which a part of a load on a hot-water supply cycle can be borne by an air conditioning cycle considering characteristics of an air conditioning system and a hot-water supply system.

### SOLUTION TO PROBLEM

In order to achieve the above-described objects, according to the present invention, an air conditioning/hot-water supply system provided with: an air conditioning refrigerant circuit that drives an air conditioning compressor to perform cooling operation and heating operation; a hot-water supply refrigerant circuit that drives a hot-water supply compressor to perform hot-water supply operation; and a control device that performs control of operation includes: hot-water supply assisting means that can radiate heat occurred when performing the heating operation in the air conditioning refrigerant circuit to the hot-water supply refrigerant circuit, wherein the control device includes: air conditioning load estimating means that estimates a current value of an air conditioning load (for example, means that performs Step S10); air conditioning power consumption estimating means that estimates a current value of an air conditioning power consumption (for example, means that performs Step S11); hot-water supply load estimating means that estimates a current value of hot-water supply load (for example, means that performs Step S12); hot-water supply power consumption estimating means that estimates a current value of a hot-water supply power consumption (for example, means that performs Step S13); air conditioning load tentative determining means that determines tentatively the estimated value of the air conditioning load (for example, means that performs Step S16); air conditioning load calculating means that calculates a new value of the air conditioning load by adding a predetermined value to the tentatively determined value of the air conditioning load (for example, means that performs Step S18); air conditioning power consumption calculating means that calculates a new air conditioning power consumption based on the new air conditioning load (for example, means that performs Step S18); hot-water supply load calculating means that calculates a new value of the hot-water supply load based on the estimated value of the air conditioning load, the estimated value of the hot-water supply load and the new value of the air conditioning load (for example, means that performs Step S19); hot-water supply power consumption calculating means that calculates a new hot-water supply power consumption based on the new value of the hot-water supply load (for example, means that performs Step S20); power consumption comparing means that compares a total estimated power consumption that is a total of the estimated value of the air conditioning power consumption and the estimated value of the hot-water supply power consumption, and a new total power consumption that is a total of the new value of the air conditioning power consumption and the new value of the hot-water supply power consumption (for example, means that performs Step S22); and assist control means that controls action of the hot-water supply assisting means so that the new total power consumption approximates the new value of the air conditioning load when the new total power consumption is judged to be smaller than the total estimated power consumption (for example, means that performs Step S28).

According to the present invention, because process by the control device is executed, and action of the hot-water supply assisting means is controlled based on the result, the air conditioning load increases, but the hot-water supply load decreases so that operation with a reduced power consumption as the whole of the system can be performed. That is, in the present invention, because a part of the hot-water supply load is borne by the air conditioning cycle, the efficiency as the whole of the system improves, and the power consumption is reduced. It should be noted that, in the present invention, a "load" includes not only an actual load (for example, current revolution of a compressor), but also a load factor obtained by dividing the actual load with a rated value (for example, rated revolution of the compressor).

Also, in the above-described configuration, the air conditioning/hot-water supply system according to the present invention is characterized by further including: first threshold determining means that judges whether the new value of the air conditioning load is larger than a predetermined first threshold (for example, means that performs Step S24), wherein a value of the air conditioning load to be a heating rated output or a maximum output of the air conditioning compressor is set as the predetermined first threshold, and when the first threshold determining means judges that the new value of the air conditioning load is larger than the predetermined first threshold, the assist control means controls the action of the hot-water supply assisting means. According to the present invention, calculation of a new power consumption exceeding a capacity of the air conditioning compressor can be prevented. That is, in the present invention, minimization of the power consumption within a range according to performance can be achieved.

Also, in the above-described configuration, the air conditioning/hot-water supply system according to the present invention is characterized by further including: second threshold determining means that judges whether the new value of the air conditioning load is larger than a predetermined second threshold (for example, means that performs Step S21), wherein a value of the air conditioning load to be a boundary between continuous operation and intermittent operation of the air conditioning compressor is set as the predetermined second threshold, and when the second threshold determining means judges that the new value of the air conditioning load is smaller than the predetermined second threshold, the air conditioning load calculating means calculates again a new air conditioning load by adding the predetermined value to the calculated new air conditioning load. According to the present invention, because it is possible to avoid the air conditioning compressor entering intermittent operation, system efficiency of the air conditioning cycle can be improved, and a load on the hot-water supply cycle can be reduced. Therefore, the present invention can improve the efficiency as the whole of the system, and can reduce the power consumption.

Also, in the above-described configuration, the air conditioning/hot-water supply system according to the present invention is characterized by further including: air conditioning target revolution determining means that determines a target revolution of the air conditioning compressor based on the new value of the air conditioning load when the new total power consumption is judged to be smaller than the total estimated power consumption (for example, means that performs Step S26), and hot-water supply target revolution determining means that determines a target revolution of the hot-water supply compressor based on the new value of the hot-water supply load when the new total power consumption is judged to be smaller than the total estimated power consumption (for example, means that performs Step S27). According to the present invention, because revolution of the compressor can be controlled, efficiency of the system can be improved.

Also, in the above-described configuration, the air conditioning/hot-water supply system according to the present invention is characterized in that the air conditioning load tentative determining means includes correcting means that corrects the estimated value of the air conditioning load when the action of the hot-water supply assisting means is under control of the assist control means (for example, means that performs Step S17). According to the present invention, because more accurate process can be performed, further improvement of the system efficiency and further reduction of the power consumption can be expected.

Also, preferred aspects of the air conditioning/hot-water supply system according to the present invention are as follows. That is, preferably, in the above-described configuration, the air conditioning/hot-water supply system according to the present invention has: an air conditioning heat transfer medium circulation circuit that is connected with the air conditioning refrigerant circuit to be able to exchange heat and through which a heat transfer medium on an air conditioning use side circulates; and a hot-water supply flow path that is connected with the hot-water supply refrigerant circuit to be able to exchange heat and through which a heat transfer medium on a hot-water supply use side flows, wherein the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on the air conditioning use side; the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on the hot-water supply heat source side; and the air conditioning heat transfer medium circulation circuit is formed to be circular by connecting between the air conditioning use side heat exchanger and an indoor heat exchanger installed in an air-conditioned space with piping; the hot-water supply assisting means includes: a hot-water supply residual heat exchanger that performs heat exchange between a heat transfer medium on the air conditioning use side and a heat transfer medium on the hot-water supply use side; and flow rate control means that controls a flow rate of the heat transfer medium on the air conditioning use side flowing to the hot-water supply residual heat exchanger; the hot-water supply residual heat exchanger is connected to the hot-water supply flow path on an upstream side of the hot-water supply use side heat exchanger, and is connected to the air conditioning heat transfer medium circulation circuit in series or in parallel with the indoor heat exchanger; and the assist control means controls action of the flow rate control means to approximate the new value of the air conditioning load.

Also, preferably, in the above-described configuration, the air conditioning/hot-water supply system according to the present invention has: a hot-water supply flow path that is connected with the hot-water supply refrigerant circuit to be able to exchange heat and through which a heat transfer medium on a hot-water supply use side flows, wherein the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on an air conditioning use side; the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on a hot-water supply heat source side, the hot-water supply assisting means includes: a hot-water supply residual heat exchanger that performs heat exchange between an air conditioning refrigerant flowing through the air conditioning refrigerant circuit and a heat transfer medium on the hot-water supply use side; and flow rate control means that controls a flow rate of the air conditioning refrigerant flowing to the hot-water supply residual heat exchanger; the hot-water supply residual heat exchanger is connected to the hot-water supply flow path on an upstream side of the hot-water supply use side heat exchanger, and is connected to the air conditioning refrigerant circuit in series or in parallel with the air conditioning use side heat exchanger; and the assist control means controls action of the flow rate control means to approximate the new value of the air conditioning load.

Also, preferably, in the above-described configuration, the air conditioning/hot-water supply system according to the present invention has: an air conditioning heat transfer medium circulation circuit that is connected to the air conditioning refrigerant circuit to be able to exchange heat and through which a heat transfer medium on an air conditioning use side circulates; a hot-water supply flow path that is connected with the hot-water supply refrigerant circuit to be able to exchange heat and through which a heat transfer medium on a hot-water supply use side circulates; and an intermediate heat transfer medium circuit through which an intermediate heat transfer medium retained in a heat storage tank that can store heat circulates; and an intermediate heat exchanger that can exchange heat among three circuits that are the air conditioning refrigerant circuit, the hot-water supply refrigerant circuit and the intermediate heat transfer medium circuit, wherein the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on the air conditioning use side; the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on a hot-water supply heat source side; the air conditioning heat transfer medium circulation circuit is formed to be circular by connecting between the air conditioning use side heat exchanger and an indoor heat exchanger installed in an air-conditioned space with piping; the hot-water supply assisting means includes: a hot-water supply residual heat exchanger that performs heat exchange between a heat transfer medium on the air conditioning use side and the intermediate heat transfer medium; and flow rate control means that controls a flow rate of a heat transfer medium on the air conditioning use side flowing to the hot-water supply residual heat exchanger; the hot-water supply residual heat exchanger is connected to the intermediate heat transfer medium circuit on an upstream side of the intermediate heat exchanger, and is connected to the air conditioning heat transfer medium circulation circuit in series or in parallel with the indoor heat exchanger; and the assist control means controls action of the flow rate control means to approximate the new value of the air conditioning load.

### ADVANTAGEOUS EFFECT OF INVENTION

According to the present invention, because a part of the hot-water supply load can be borne by the air conditioning cycle, a load on the air conditioning cycle operation increases, but a load on the hot-water supply cycle operation decreases so that efficiency as the whole of the air conditioning/hot-water supply system improves, and a power consumption is reduced.

### BRIEF DESCRIPTION OF DRAWINGS

[Fig. 1] Fig. 1 is a system diagram of an air conditioning/hot-water supply system according to a first embodiment of the present invention.
[Fig. 2] Fig. 2 is a flowchart showing a procedure of process of determining a control mode of the air conditioning/hot-water supply system shown in Fig. 1.
[Fig. 3] Fig. 3 is a flowchart showing a procedure of process in an assist control mode of the air conditioning/hot-water supply system shown in Fig. 1 and showing the continuation of Fig. 2.
[Fig. 4] Fig. 4 is a flowchart showing process in the assist control mode of the air conditioning/hot-water supply system shown in Fig. 1 and showing the continuation of Fig. 3.
[Fig. 5] Fig. 5 is a flowchart showing process in the assist control mode of the air conditioning/hot-water supply system shown in Fig. 1 and showing the continuation of Fig. 4.
[Fig. 6] Fig. 6 is a diagram showing details of a data structure of a table 1 shown in Fig. 3.
[Fig. 7] Fig. 7 is a figure showing details of a data structure of a table 2 shown in Fig. 3.
[Fig. 8] Fig. 8 is a diagram showing details of a data structure of a table 3 shown in Fig. 3.
[Fig. 9] Fig. 9 is a diagram showing details of a data structure of a table 4 shown in Fig. 3.
[Fig. 10] Fig. 10 is a diagram showing details of a data structure of a table 5 shown in Fig. 3.
[Fig. 11] Fig. 11 is a diagram showing details of a data structure of a table 6 shown in Fig. 3.
[Fig. 12] Fig. 12 is a diagram showing details of a data structure of a table 7 shown in Fig. 4.
[Fig. 13] Fig. 13 is a diagram showing details of a data structure of a table 8 shown in Fig. 4.
[Fig. 14] Fig. 14 is a graph showing a load factor-power consumption curve on an air conditioning side and a load-factor-power consumption curve on a hot-water supply side.
[Fig. 15] Fig. 15 is an action diagram showing flows of a refrigerant and a heat transfer medium in an operation mode No. 1 of the air conditioning/hot-water supply system shown in Fig. 1.
[Fig. 16] Fig. 16 is an action diagram showing flows of a refrigerant and a heat transfer medium in an operation mode No. 2 of the air conditioning/hot-water supply system shown in Fig. 1.
[Fig. 17] Fig. 17 is an action diagram showing flows of a refrigerant and a heat transfer medium in an operation mode No. 3 of the air conditioning/hot-water supply system shown in Fig. 1.
[Fig. 18] Fig. 18 is a system diagram showing a variant of the air conditioning/hot-water supply system according to the first embodiment of the present invention.
[Fig. 19] Fig. 19 is a system diagram of an air conditioning/hot-water supply system according to a second embodiment of the present invention.
[Fig. 20] Fig. 20 is a system diagram of an air conditioning/hot-water supply system according to a third embodiment of the present invention.

### DESCRIPTION OF EMBODIMENTS

### [First Embodiment of the Present Invention]

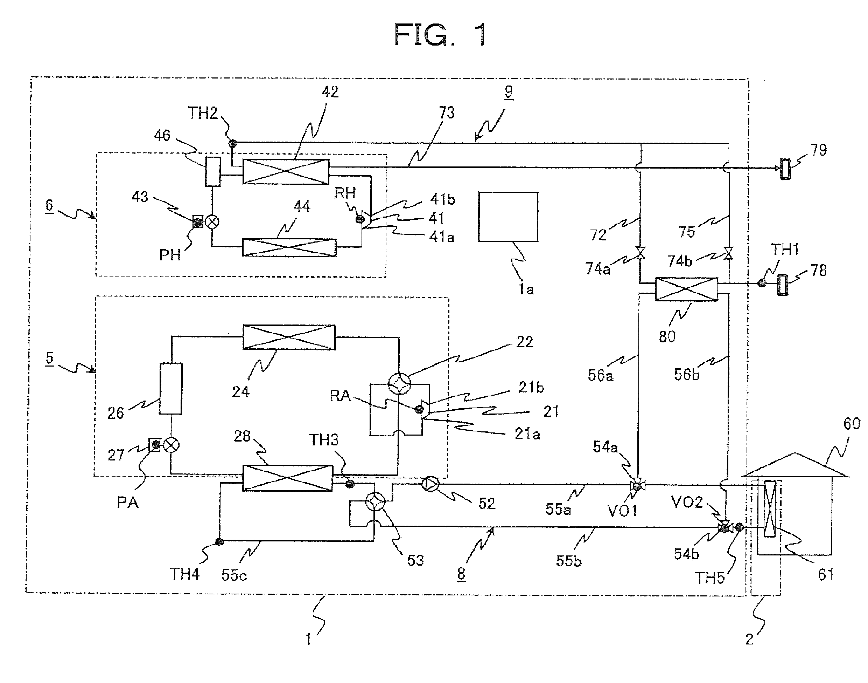

An air conditioning/hot-water supply system according to a first embodiment of the present invention includes, as shown in Fig. 1: an air conditioning refrigerant circuit 5 that drives an air conditioning compressor 21 to perform operation switching between cooling operation and heating operation; a hot-water supply refrigerant circuit 6 that drives a hot-water supply compressor 41 to perform hot-water supply operation; an air conditioning cold/hot water circulation circuit (air conditioning heat transfer medium circulation circuit) 8 that exchanges heat with the air conditioning refrigerant circuit 5 to perform air conditioning of the inside of a house (air-conditioned space) 60; a hot-water supply flow path 9 that exchanges heat with the hot-water supply refrigerant circuit 6 to perform hot-water supply; and a control device 1a that performs control of operations. Also, the air conditioning/hot-water supply system according to the first embodiment of the present invention has a unit configuration including a heat pump unit 1 arranged outside and an indoor unit 2 arranged inside.

The air conditioning refrigerant circuit 5, the hot-water supply refrigerant circuit 6, the air conditioning cold/hot water circulation circuit 8, the hot-water supply flow path 9 and the control device 1a are incorporated in the heat pump unit 1. Furthermore, a hot-water supply residual heat exchanger (hot-water supply assisting means) 80 is arranged between the air conditioning cold/hot water circulation circuit 8 and the hot-water supply flow path 9. This hot-water supply residual heat exchanger 80 has a structure that allows heat exchange between water flowing through the air conditioning cold/hot water circulation circuit 8 and water flowing through the hot-water supply flow path 9.

The air conditioning refrigerant circuit 5 is a circuit through which an air conditioning refrigerant circulates to form a refrigerating cycle (air conditioning cycle), and is formed to be circular by connecting, with refrigerant piping, the air conditioning compressor 21 that compresses the air conditioning refrigerant, a four-way valve (air conditioning flow path switching valve) 22 that switches a flow path of the air conditioning refrigerant, an air conditioning heat source side heat exchanger 24 that exchanges heat with an outside air sent by a fan (not illustrated), an air conditioning refrigerant tank 26, an air conditioning expanding valve 27 that decompresses the air conditioning refrigerant and an air conditioning use side heat exchanger 28 that exchanges heat with the air conditioning cold/hot water circulation circuit 8. It should be noted that a refrigerant suited for a use condition is used from among R410a, R134a, HFO1234yf, HFO1234z and CO2 as the air conditioning refrigerant that circulates through the air conditioning refrigerant circuit 5.

Next, a structure of each of the equipment incorporated in the above-described air conditioning refrigerant circuit 5 will be explained in detail. The air conditioning compressor 21 is a variable displacement compressor whose capacity can be controlled. A piston type, rotary type, scroll type, screw type or centrifugal type can be adopted as such a compressor. Specifically, the air conditioning compressor 21 is a scroll type compressor whose capacity can be controlled by inverter control, and whose rotational speed can be varied from a low speed to a high speed.

The air conditioning use side heat exchanger 28 is, although not illustrated, configured such that an air conditioning refrigerant heat transfer tube through which the air conditioning refrigerant flows and an air conditioning cold/hot water heat transfer tube through which water (heat transfer medium on an air conditioning use side) flows contact thermally. The air conditioning refrigerant tank 26 has a function as a buffer that controls an amount of the air conditioning refrigerant that changes due to switching of a flow path of the air conditioning refrigerant circuit 5. The air conditioning expanding valve 27 can decompress the air conditioning refrigerant to a predetermined pressure by adjusting opening thereof.

The air conditioning cold/hot water circulation circuit (air conditioning heat transfer medium circulation circuit) 8 is a circuit through which water flows as a heat transfer medium on an air conditioning use side for exchanging heat with the air conditioning refrigerant circuit 5, and is formed to be circular by connecting a four-way valve 53, an air conditioning cold/hot water circulation pump 52 and an indoor heat exchanger 61 installed in the house (air-conditioned space) 60 with air conditioning cold/hot water piping 55a, connecting the indoor heat exchanger 61 and the four-way valve 22 with air conditioning cold/hot water piping 55b, and connecting the four-way valve 53 and the air conditioning use side heat exchanger 28 with air conditioning cold/hot water piping 55c. Water flowing in this air conditioning cold/hot water circulation circuit 8 (cold water or hot water) exchanges heat with air in the house 60 via the indoor heat exchanger 61 to cool or heat inside the house 60. Here, as the heat transfer medium on the air conditioning use side flowing in the air conditioning cold/hot water circulation circuit 8, brine such as ethylene glycol may be used instead of water. It is needless to say that use of brine allows application in a cold climate region.

It should be noted as additional remarks here that, in the following explanation, although terms "cold water" and "hot water" are sometimes used for water flowing through the air conditioning cold/hot water circulation circuit 8, "cold water" refers to water flowing through the air conditioning cold/hot water circulation circuit 8 at the time of cooling, and "hot water" refers to water flowing through the air conditioning cold/hot water circulation circuit 8 at the time of heating.

Furthermore, the hot-water supply residual heat exchanger 80 is connected with the air conditioning cold/hot water circulation circuit 8 in parallel with the indoor heat exchanger 61. Specifically, by connecting a three-way valve (flow rate control means, hot-water supply assisting means) 54a provided at a position near an inlet of the indoor heat exchanger 61 of the air conditioning cold/hot water piping 55a and an inlet of a hot-water supply heat exchanger 80 with air conditioning cold/hot water piping 56a, and connecting a three-way valve (flow rate control means, hot-water supply assisting means) 54b provided at a position near an outlet of the indoor heat exchanger 61 of the air conditioning cold/hot water piping 55b and an outlet of the hot-water supply heat exchanger 80 with air conditioning cold/hot water piping 56b, the indoor heat exchanger 61 and the hot-water supply residual heat exchanger 80 are in a parallel relationship with the air conditioning cold/hot water circulation circuit 8. With this configuration, two paths that are a flow path for water to flow through the indoor heat exchanger 61 and a flow path for water to flow through the hot-water supply residual heat exchanger 80 are formed in the air conditioning cold/hot water circulation circuit 8. It should be noted that the hot-water supply residual heat exchanger 80 and the three-way valves 54a, 54b correspond to hot-water supply assisting means of the present invention.

The hot-water supply refrigerant circuit 6 is a circuit through which a hot-water supply refrigerant circulates to form a refrigerating cycle (hot-water supply cycle), and is formed to be circular by connecting, with refrigerant piping, the hot-water supply compressor 41 that compresses the hot-water supply refrigerant, a hot-water supply use side heat exchanger 42 that exchanges heat with the hot-water supply flow path 9, a hot-water supply refrigerant tank 46 having a function as a buffer that controls an amount of the hot-water supply refrigerant, a hot-water supply expanding valve 43 that decompresses the hot-water supply refrigerant and a hot-water supply heat source side heat exchanger 44 that exchanges heat with an outside air sent by a fan (not illustrated). It should be noted that a refrigerant suited for a use condition is used from among R410a, R134a, HFO1234yf, HFO1234ze and CO2 as the hot-water supply refrigerant that circulates through the hot-water supply refrigerant circuit 6.

Next, a structure of each of the equipment incorporated in the above-described hot-water supply refrigerant circuit 6 will be explained in detail. Capacity of the hot-water supply compressor 41 can be controlled by inverter control similar to the air conditioning compressor 21, and a rotational speed thereof can be varied from a low speed to a high speed. The hot-water supply use side heat exchanger 42 is, although not illustrated, configured such that a hot-water supply water heat transfer tube through which water to be supplied to the hot-water supply flow path 9 flows and a hot-water supply refrigerant heat transfer tube through which the hot-water supply refrigerant flows contact thermally. The hot-water supply expanding valve 43 can decompress the hot-water supply refrigerant to a predetermined pressure by adjusting opening thereof.

The hot-water supply flow path 9 is a flow path in which an inlet of the hot-water supply use side heat exchanger 42 and a water supply inlet 78 are connected by hot-water supply piping 72, an outlet of the hot-water supply use side heat exchanger 42 and a hot-water supply outlet 79 are connected by hot-water supply piping 73, and the hot-water supply residual heat exchanger 80 is incorporated and formed at a position on an upstream side of the hot-water supply use side heat exchanger 42 of the hot-water supply piping 72. It should be noted that a two-way valve 74a is attached at a position near an outlet of the hot-water supply residual heat exchanger 80 of the hot-water supply piping 72. Furthermore, hot-water supply bypass piping 75 that bypasses the hot-water supply residual heat exchanger 80 is provided to the hot-water supply piping 72. It should be noted that a two-way valve 74b is provided to this hot-water supply bypass piping 75. With this configuration, two flow paths that are a flow path for water having flowed into the water supply inlet 78 to pass the hot-water supply residual heat exchanger 80, then pass the hot-water supply use side heat exchanger 42, and flow out of the hot-water supply outlet 79 and a flow path for water having flowed into the water supply inlet 78 to flow through the hot-water supply bypass piping 75, pass the hot-water supply use side heat exchanger 42, and flow out of the hot-water supply outlet 79 are formed in the hot-water supply flow path 9. It should be noted that water (hot water) having flowed out of the hot-water supply outlet 79 is supplied to a hot-water supply load side (bathtub, lavatory, kitchen and the like). Also, although not illustrated, a flow rate sensor that detects a flow rate of water is incorporated in the hot-water supply flow path 9.

This air conditioning/hot-water supply system includes a plurality of temperature sensors TH1 to TH5. Specifically, in the air conditioning cold/hot water circulation circuit 8, the temperature sensor TH4 is provided to an inlet of the air conditioning use side heat exchanger 28 at the time of heating operation, the temperature sensor TH3 is provided at an outlet of the air conditioning use side heat exchanger 28 at the time of heating operation, and the temperature sensor TH5 is provided to the outlet of the indoor heat exchanger 61. Also, in the hot-water supply flow path 9, the temperature sensor TH2 is provided to the inlet of the hot-water supply use side heat exchanger 42, and the temperature sensor TH1 is provided to the water supply inlet 78. Also, a temperature sensor (not illustrated) for measuring the outside air temperature is provided. Furthermore, a revolution detecting sensor RA for detecting revolution is provided to the air conditioning compressor 21. A revolution detecting sensor RH is similarly provided to the hot-water supply compressor 41. Also, a valve opening detecting sensor PA that detects opening of a valve is provided to the air conditioning expanding valve 27, and a valve opening detecting sensor PH that detects opening of a valve is provided to the hot-water supply expanding valve 43. Also, valve opening detecting sensors VO1, VO2 are provided to the three-way valves 54a, 54b, respectively.

The control device 1a receives inputs such as command signals from an unillustrated remote controller and detection signals from the temperature sensors TH1 to TH5, the revolution detecting sensors RA, RH and the valve opening detecting sensors PA, PH, VO1, VO2, and based on these input signals, performs: driving/stopping of the air conditioning compressor 21 and the hot-water supply compressor 41; switching of the four-way valves 22, 53; adjustment of opening of the air conditioning expanding valve 27 and the hot-water supply expanding valve 43; switching of the three-way valves 54a, 54b; driving/stopping of the air conditioning cold/hot water circulation pump 52; opening and closing of the two-way valves 74a, 74b; and other control necessary for operation of the air conditioning/hot-water supply system.

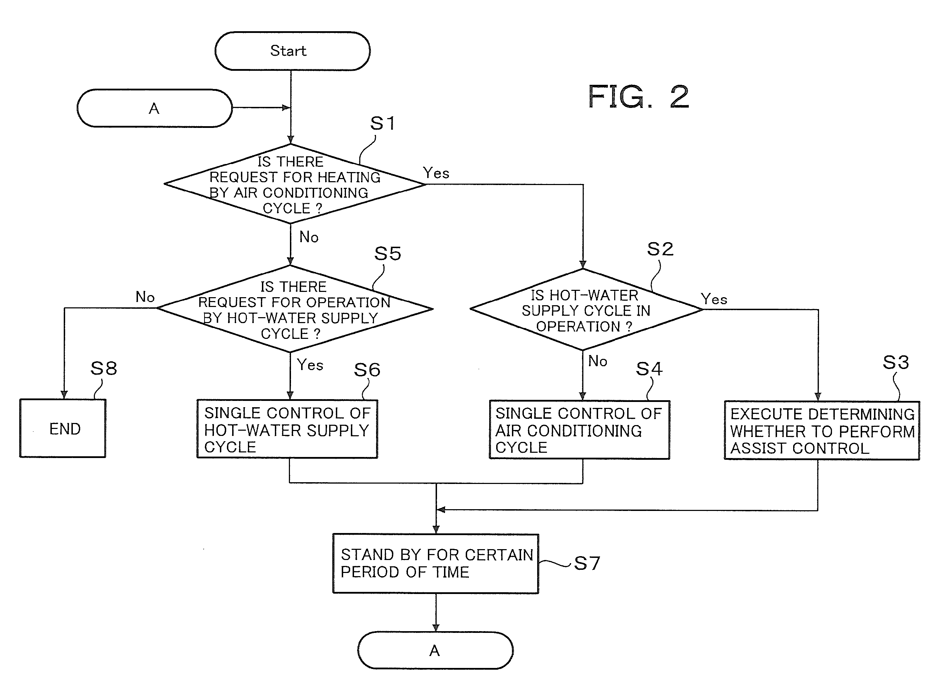

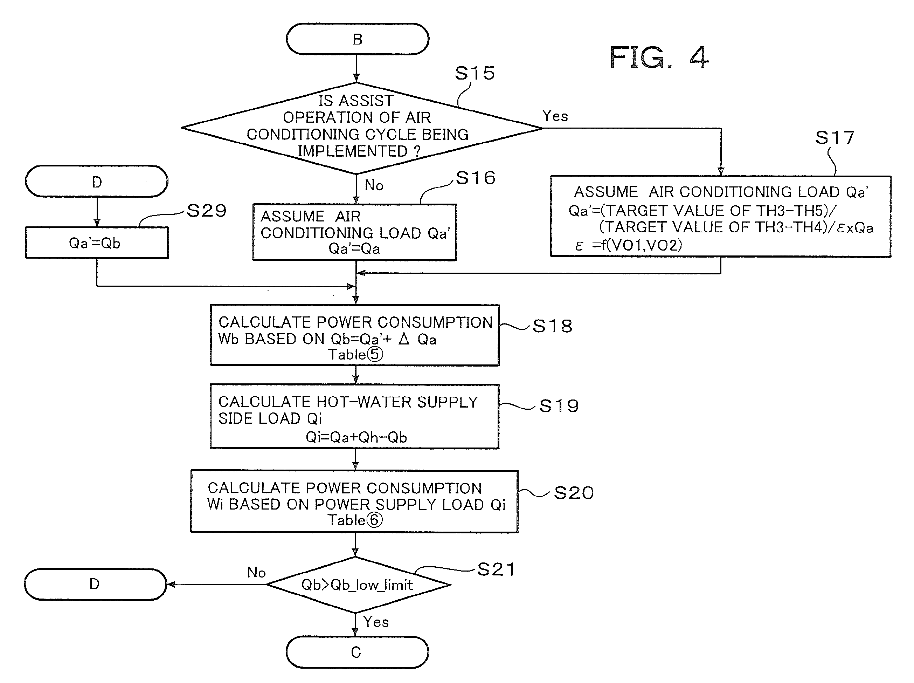

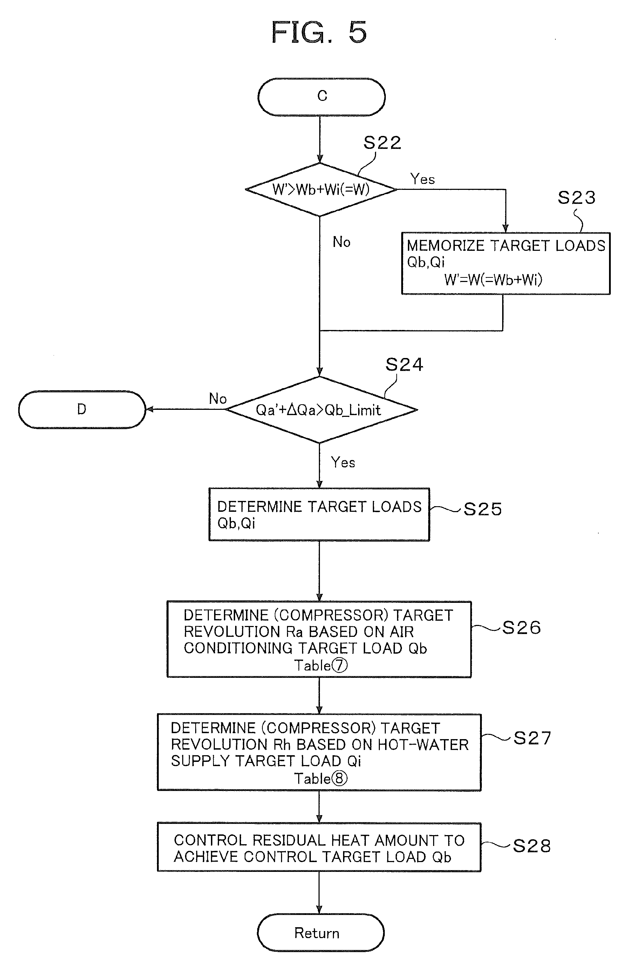

Next, control of operation of the air conditioning/hot-water supply system performed by the control device 1a will be explained in detail using Figs. 2 to 13. First, the control device 1a judges whether there is a request for heating by the air conditioning cycle (Step S1). When the control device 1a judges that there is a heating request (Yes at Step S1), the control device 1a judges whether the hot-water supply cycle is in operation (Step S2). When the control device 1a judges that the hot-water supply cycle is in operation (Yes at Step S2), the control device 1a proceeds to Step S3, and executes a process of determining whether to perform assist control. That is, at Step S3, the control device 1a determines whether to proceed to an assist operation mode for performing a hot-water supply assist operation by assist control means or to a normal operation mode for performing a normal operation. Then, the control device 1a starts operation control of the air conditioning cycle and the hot-water supply cycle with a determined operation mode.

Subsequently, the control device 1a proceeds to Step S7 and stands by for a certain period of time. Then, the control device 1a returns again to Step S1, and performs process of and after Step S1. Also, when the control device 1a judges at Step S2 that the hot-water supply cycle is not in operation (No at Step S2), the control device 1a proceeds to Step S4, and performs single control of the air conditioning cycle.

On the other hand, when the control device 1a judges that there is no heating request at Step S1 (No at Step S1), the control device 1a proceeds to Step S5, and judges whether there is a request for the hot-water supply cycle operation. When the control device 1a judges that there is a request for the hot-water supply cycle operation (Yes at Step S5), the control device 1a proceeds to Step S6, and performs single control of the hot-water supply cycle. Then, after the control device 1a stands by for a certain period of time at Step S7, the control device 1a returns to Step S1, and performs process of and after Step S1. Also, when the control device 1a judges that there is no request for the hot-water supply cycle operation (No at Step S5), the control device 1a proceeds to Step S8, and executes end processing.

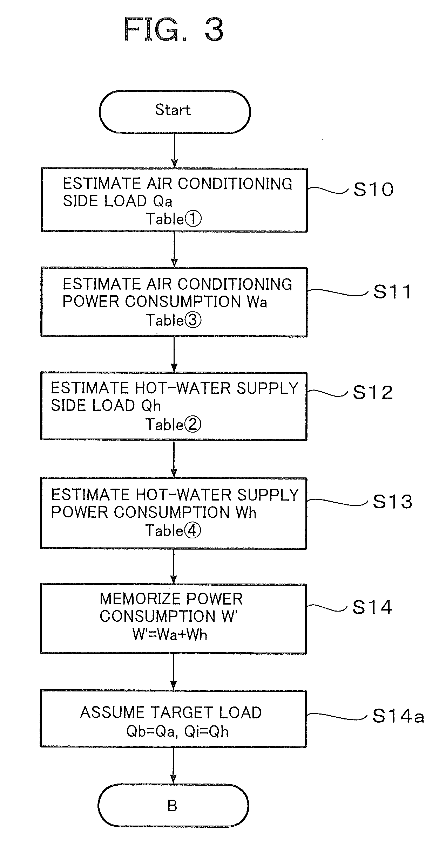

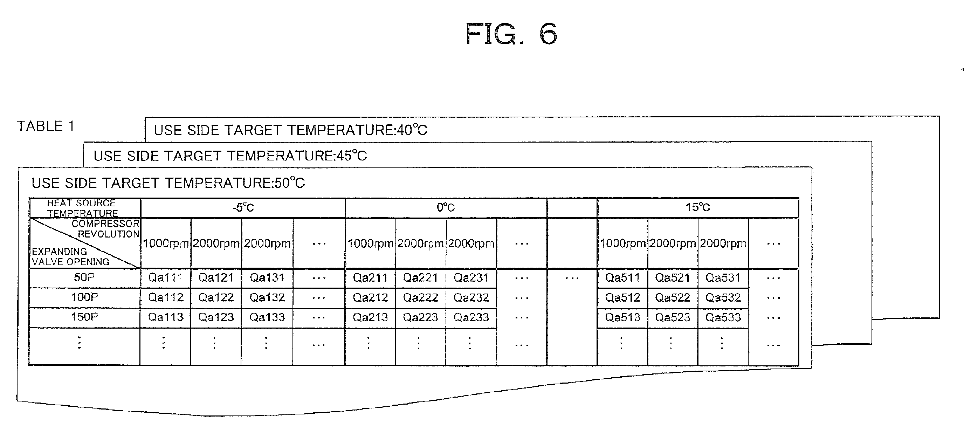

Next, a specific example of the process of determining whether to perform assist control performed by the control device 1a at Step S3 will be explained. First, at Step S10 shown in Fig. 3, the control device 1a refers to a table 1 to estimate a current value of an air conditioning load Qa. The table 1 is, as shown in Fig. 6, a data table in which revolution of the air conditioning compressor 21 (value of the revolution detecting sensor RA), a pulse of the air conditioning expanding valve 27 (value of the valve opening detecting sensor PA) and the air conditioning load Qa are associated with each other in advance for each use side target temperature (hot water outlet temperature target value, a target value of temperature measured by the temperature sensor TH3) and heat source temperature (outside air temperature).

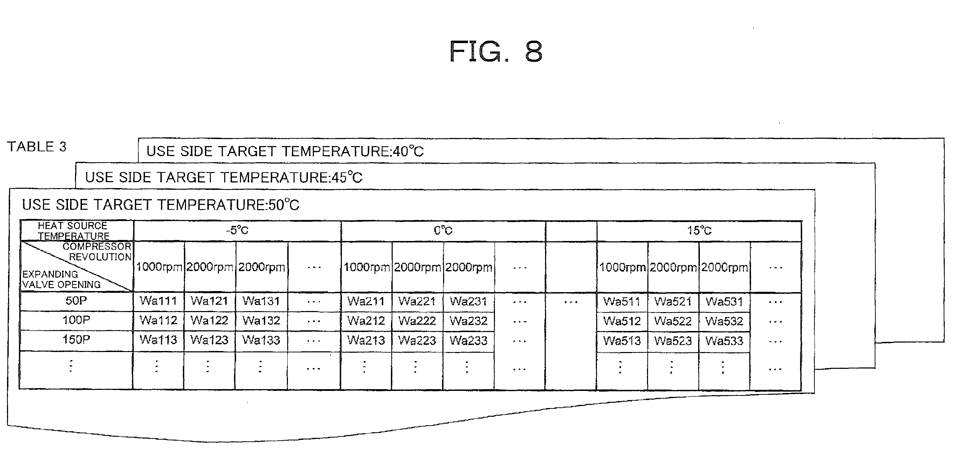

Next, at Step S11, the control device 1a refers to a table 3 to estimate a current value of an air conditioning power consumption Wa. The table 3 is, as shown in Fig. 8, a data table in which revolution of the air conditioning compressor 21 (value of the revolution detecting sensor RA), a pulse of the air conditioning expanding valve 27 (value of the valve opening detecting sensor PA) and the air conditioning power consumption Wa are associated with each other in advance for each use side target temperature (hot water outlet temperature target value) and heat source temperature (outside air temperature). It should be noted that the air conditioning power consumption stored in the table 3 may be substituted with a current value in a control panel.

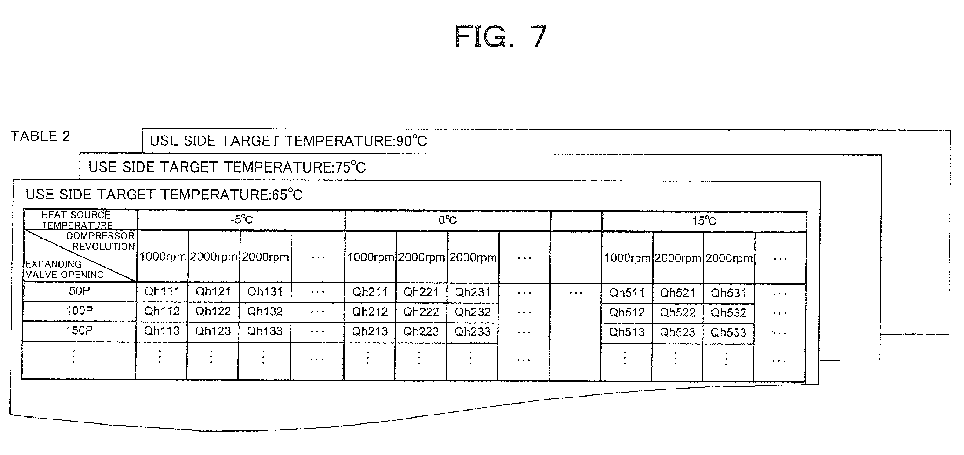

Next, at Step S12, the control device 1a refers to a table 2 to estimate a current value of a hot-water supply load Qh. The table 2 is, as shown in Fig. 7, a data table in which revolution of the hot-water supply compressor 41 (value of the revolution detecting sensor RH), a pulse of the hot-water supply expanding valve 43 (value of the valve opening detecting sensor PH) and the hot-water supply load Qh are associated with each other in advance for each use side target temperature (hot-water supply temperature target value) and heat source temperature (outside air temperature).

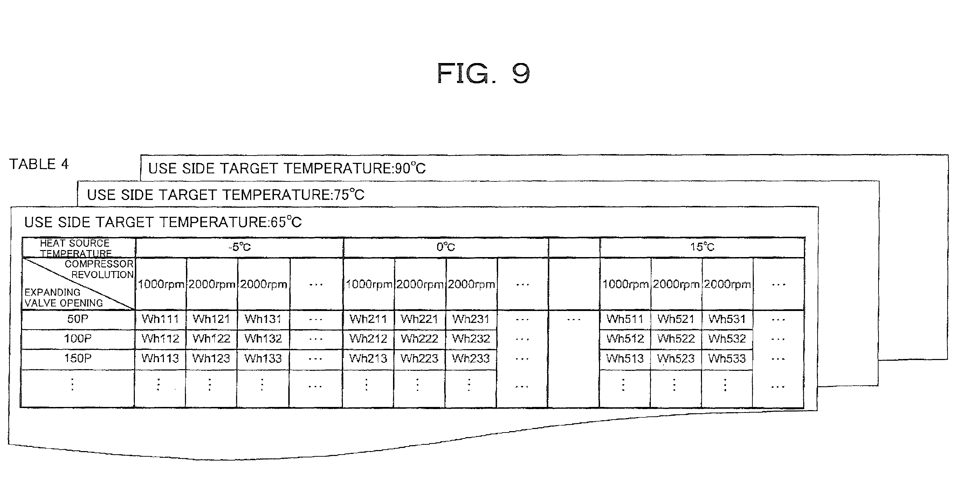

Next, at Step S13, the control device 1a refers to a table 4 to estimate a current value of a hot-water supply power consumption Wh. The table 4 is, as shown in Fig. 9, a data table in which revolution of the hot-water supply compressor 41 (value of the revolution detecting sensor RH), a pulse of the hot-water supply expanding valve 43 (value of the valve opening detecting sensor PH) and the hot-water supply power consumption (Wh) are associated with each other in advance for each use side target temperature (hot-water supply temperature target value) and heat source temperature (outside air temperature). It should be noted that the hot-water supply power consumption stored in the table 4 may be substituted with a current value in the control panel.

Next, at Step S14, the control device 1a memorizes a total value of the estimated value of the air conditioning power consumption (Wa) and the estimated hot-water supply power consumption (Wh) as a total estimated power consumption (W').

Next, at Step S14a, the control device 1a assumes a target load. Specifically, the control device 1a sets Qb=Qa and Qi=Qh.

Next, at Step S15, the control device 1a judges whether the hot-water supply assist operation described below is currently being implemented. When the control device 1a judges that the hot-water supply assist operation is not being implemented (No at Step S15), the control device 1a proceeds to Step S16, and tentatively determines the air conditioning load (Qa) estimated at Step S10 to be an air conditioning load (Q'a). On the other hand, when the control device 1a judges that the hot-water supply assist operation is being implemented (Yes at Step S15), the control device 1a tentatively determines a value obtained by correcting the value of the air conditioning load (Qa) estimated at Step S10 to be the air conditioning load (Q'a). Specifically, as shown in Step S17, a value is obtained by Qa'=(target value of temperature measured by the temperature sensor TH3-measured value of the temperature sensor TH5)/(target value of temperature measured by the temperature sensor TH3-measured value of the temperature sensor TH4)/correction factor εdecided based on the valve opening (VO1, VO2) ×estimated air conditioning load (Qa), and the obtained value is tentatively determined to be the corrected air conditioning load (Qa'). Here, ε=f(VO1, VO2). It should be noted that a flow rate meter that gauges a flow rate in the indoor heat exchanger 61 may be installed to obtain a value based on the flow rate, TH3 and TH5.

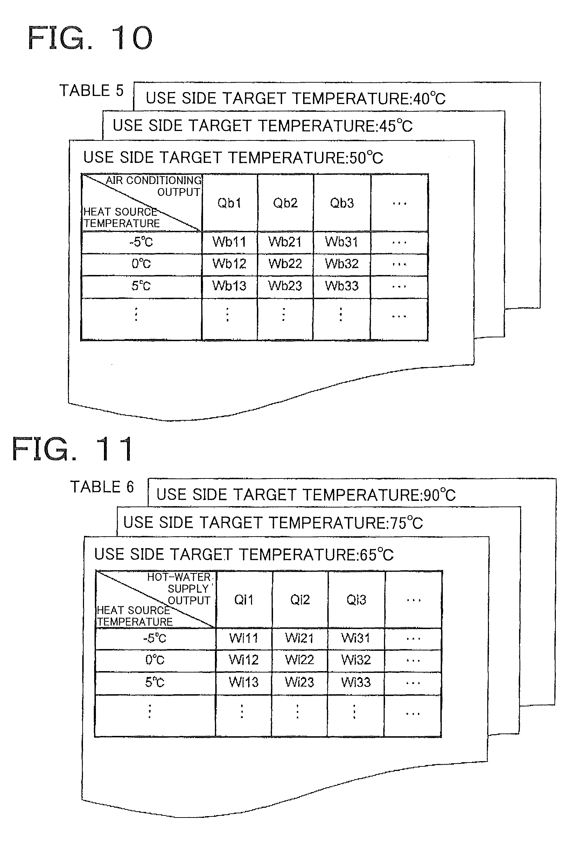

Next, at Step S18, the control device 1a calculates a new value of the air conditioning load (Qb) by adding a predetermined value (AQ) to the tentatively determined value of the air conditioning load (Qa'). Then, the control device 1a refers to a table 5 to calculate an air conditioning power consumption (Wb) based on the new value of the air conditioning load (Qb). Here, the table 5 is, as shown in Fig. 10, a data table in which a heat source temperature (outside air temperature), the air conditioning output (Qb) and the air conditioning power consumption (Wb) are associated with each other in advance for each use side target temperature (hot water outlet temperature target value).

Next, at Step S19, the control device 1a calculates a new value of the hot-water supply load (Qi) by subtracting a new value of the air conditioning load (Qb) from a value with an estimated value of the hot-water supply load (Qh) added to the estimated value of the air conditioning load (Qa).

Next, at Step S20, the control device 1a refers to a table 6 to calculate a new hot-water supply power consumption (Wi) based on the new value of the hot-water supply load (Qi). Here, the table 6 is, as shown in Fig. 11, a data table in which the heat source temperature (outside air temperature), the hot-water supply output (Qi) and the hot-water supply power consumption (Wi) are associated with each other in advance for each use side target temperature (hot-water supply temperature target value).

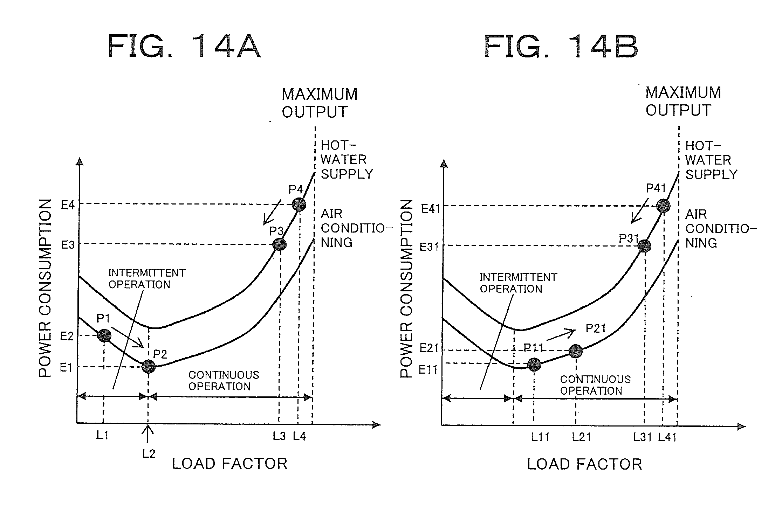

Next, the control device 1a proceeds to Step S21, and judges whether Qb is larger than Qb_low_limit (predetermined second threshold). When Qb is larger than Qb_low_limit (Yes at Step S21), the control device 1a proceeds to Step S22. On the other hand, when Qb is smaller than Qb_low_limit (No at Step S21), the control device 1a skips to Step S29, and performs process of setting Qa'=Qb, and performs process of and after Step S18 again. Here, Qb_low_limit is set as a value of the air conditioning load to be a boundary between continuous operation and intermittent operation of the air conditioning compressor 21, that is, a load factor L2 (see Fig. 14(a)). Accordingly, by performing the process of Step S21, it is possible to avoid operation of the air conditioning compressor 21 at an intermittent operation area.

Next, at Step S22, the control device 1a compares a total estimated power consumption (W') that is a total of the estimated value of the air conditioning power consumption (Wa) and the estimated value of the hot-water supply power consumption (Wh) and a new total power consumption (W) that is a total of the new value of the air conditioning power consumption (Wb) and the new value of the hot-water supply power consumption (Wi). When the new total power consumption (W) is judged to be smaller than the total estimated power consumption (W') (Yes at step S22), the control device 1a memorizes the new value of the air conditioning load (Qb) and the new hot-water supply load (Qi), sets the total estimated power consumption (W')=W(=Wb+Wi) (Step S23), and proceeds to Step S24. On the other hand, when the new total power consumption (W) is judged to be larger than the total estimated power consumption (W') (No at Step S22), the control device 1a proceeds directly to Step S24.

Then, at Step S24, the control device 1a judges whether the new value of the air conditioning load (Qb=Qa'+ΔQa) is larger than the predetermined first threshold (Qb_Limit). When the new value of the air conditioning load is judged to be larger than the threshold (Yes at Step S24), at Step S25, the control device 1a determines the new value of the air conditioning load (Qb) and the new value of the hot-water supply load (Qi) to be target loads. Here, in the present embodiment, because the predetermined threshold (Qb_Limit) is set as a value of an air conditioning load to be a heating rated output or a maximum output of the air conditioning compressor 21, estimation of the new power consumption Qb larger than the maximum output of the air conditioning cycle is prevented from being performed.

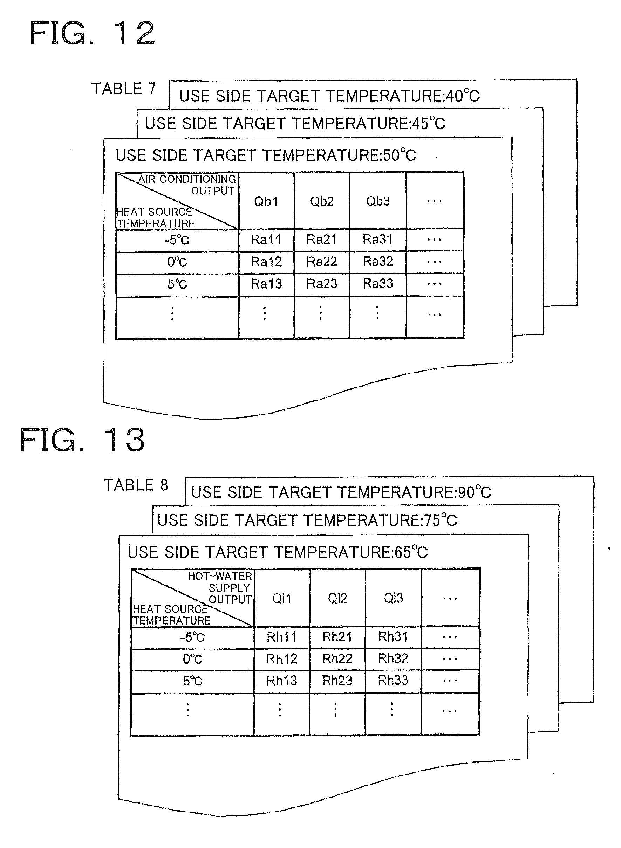

Next, at Step S26, the control device 1a refers to a table 7 to determine a target revolution (Ra) of the air conditioning compressor 21 based on the new air conditioning load (Qb). Here, the table 7 is, as shown in Fig. 12, a data table in which a target revolution of the air conditioning compressor 21 is associated with the heat source temperature (outside air temperature) and the air conditioning output (Qb) in advance for each use side target temperature (hot water outlet temperature target value).

Next, at Step S27, the control device 1a refers to a table 8 to determine a target revolution (Rh) of the hot-water supply compressor 41 based on the new hot-water supply load (Qi). Here, the table 8 is, as shown in Fig. 13, a data table in which a target revolution of the hot-water supply compressor 41 is associated with the heat source temperature (outside air temperature) and the hot-water supply output (Qi) in advance for each use side target temperature (hot-water supply temperature target value).

Next, at Step S28, to approximate the new value of the air conditioning load (Qb) that is set as the target load, the control device 1a performs operation, i.e. the hot-water supply assist operation, by opening the two-way valve 74a to make water flow from the water supply inlet 78 to the hot-water supply residual heat exchanger 80 and controlling a flow rate of hot water flowing through the air conditioning cold/hot water circulation circuit 8 by adjusting opening of ports of the three-way valve 54a and the three-way valve 54b to make the hot water flow through the hot-water supply residual heat exchanger 80.

Furthermore, while the hot-water supply assist operation is performed, the control device 1a (i) controls revolution of the air conditioning compressor 21 to be operated at the target revolution (Ra), (ii) performs, for example, PI control of the opening of each port of the three-way valves 54a, 54b so that the temperature becomes the target value of the air conditioning use side outlet temperature (temperature of the temperature sensor TH3), (iii) controls the valve opening of the air conditioning expanding valve 27 so that the temperature becomes the target value of the suction temperature (or discharge temperature) of the air conditioning compressor 21, and (iv) fixes the opening of the three-way valves 54a, 54b after an elapse of a certain period of time, and controls the revolution of the air conditioning compressor 21 so that the temperature becomes the target value of the air conditioning use side outlet temperature.

Also, in a case of No at Step S24, the control device 1a skips to Step S29 and sets Qa'=Qb, and then returns to Step S18 to execute process of and after Step S18 again.

It should be noted that, to avoid operation of the air conditioning compressor 21 from being performed in an area of intermittent operation (see Fig. 14), the above-described tables have to be created such that revolution is equal to or more than the minimum revolution that is decided based on characteristics of the air conditioning compressor 21.

Here, among the control means included in the control device 1a, the means that performs the process of Step S10 corresponds to air conditioning load estimating means of the present invention; the means that performs the process of Step S11 corresponds to air conditioning power consumption estimating means of the present invention; the means that performs the process of Step S12 corresponds to hot-water supply load estimating means of the present invention; the mean that performs the process of Step S13 corresponds to hot-water supply power consumption estimating means of the present invention; the means that performs the process of Step S16 corresponds to air conditioning load tentative determining means of the present invention; the means that performs the process of the Step S17 corresponds to correcting means of the present invention; the means that performs the process of Step S18 corresponds to air conditioning load calculating means and air conditioning power consumption calculating means of the present invention; the means that performs the process of Step S19 corresponds to hot-water supply load calculating means of the present invention; the means that performs the process of Step S20 corresponds to hot-water supply power consumption calculating means of the present invention; the means that performs the process of Step S21 corresponds to second threshold determining means of the present invention; the means that performs the process of Step S22 corresponds to power consumption comparing means of the present invention; the means that performs the process of Step S24 corresponds to first threshold judging means of the present invention; the means that performs the process of Step S26 corresponds to air conditioning target revolution determining means of the present invention; the means that performs the process of Step S27 corresponds to hot-water supply target revolution determining means of the present invention; and the means that performs the process of Step S28 corresponds to assist control means of the present invention.

Next, how a power consumption is reduced when the control device 1a performs the above-described hot-water supply assist operation will be explained in detail using Fig. 14. Fig. 14 shows a load factor-power consumption curve of the air conditioning compressor 21, and a load factor-power consumption curve of the hot-water supply compressor 41. First, Fig. 14(a) shows how a power consumption changes by performing the hot-water supply assist operation when the air conditioning compressor 21 is operated in the intermittent operation area. As shown in Fig. 14(a), if the state on the air conditioning side before performing the hot-water supply assist operation is P1, because in this P1, the air conditioning compressor 21 is operated in the intermittent operation area, the power consumption is E2. However, when the hot-water supply assist operation increases the air conditioning load from L1 to L2, the state P1 moves on the curve to a state P2. Because in this state P2, the air conditioning compressor 21 is operated in the continuous operation area, the power consumption becomes only E1. Therefore, although the load factor on the air conditioning side increased from L1 to L2 due to the hot-water supply assist operation, the power consumption decreased from E2 to E1.

Furthermore, because water flowing through the hot-water supply flow path 9 is warmed by the hot-water supply residual heat exchanger 80 due to the hot-water supply assist operation, a load on the hot-water supply cycle is reduced. Accordingly, if a state on the hot-water supply side before performing the hot-water supply assist operation is P4, the state moves on the curve from P4 to P3 by performing the hot-water supply assist operation, the load factor lowers from L4 to L3, and a power consumption is reduced from E4 to E3. Therefore, the power consumption is reduced by the decrease of E2-E1 and the decrease of E4-E3 by performing the hot-water supply assist operation.

On the other hand, Fig. 14(b) shows how a power consumption changes by performing the hot-water supply assist operation when the air conditioning compressor 21 is operated in the continuous operation area. As shown in Fig. 14(b), if a state on the air conditioning side before performing the hot-water supply assist operation is P11, the power consumption is E11 in this P11. Here, the state on the air conditioning side changes from P11 to P21 by performing the hot-water supply assist operation, and the load factor on the air conditioning side increases from L11 to L21. Accordingly, the power consumption on the air conditioning side rises from E11 to E21. However, because water flowing through the hot-water supply flow path 9 is warmed by the hot-water supply residual heat exchanger 80 due to the hot-water supply assist operation, the load on the hot-water supply cycle is reduced. Accordingly, if a state on the hot-water supply side before performing the hot-water supply assist operation is P41, the state moves on the curve from P41 to P31 by performing the hot-water supply assist operation, the load factor decreases from L41 to L31, and the power consumption is reduced from E41 to E31. Here, because the decrease of the power consumption of E41-E31 is larger as compared with the increase of the power consumption of E21-E11, the power consumption is reduced as the whole of the air conditioning/hot-water supply system.

In this way, because the control device 1a can control to perform the above-described hot-water supply assist operation in the air conditioning/hot-water supply system according to the first embodiment, a significant reduction of the power consumption can be realized as shown in Fig. 14.

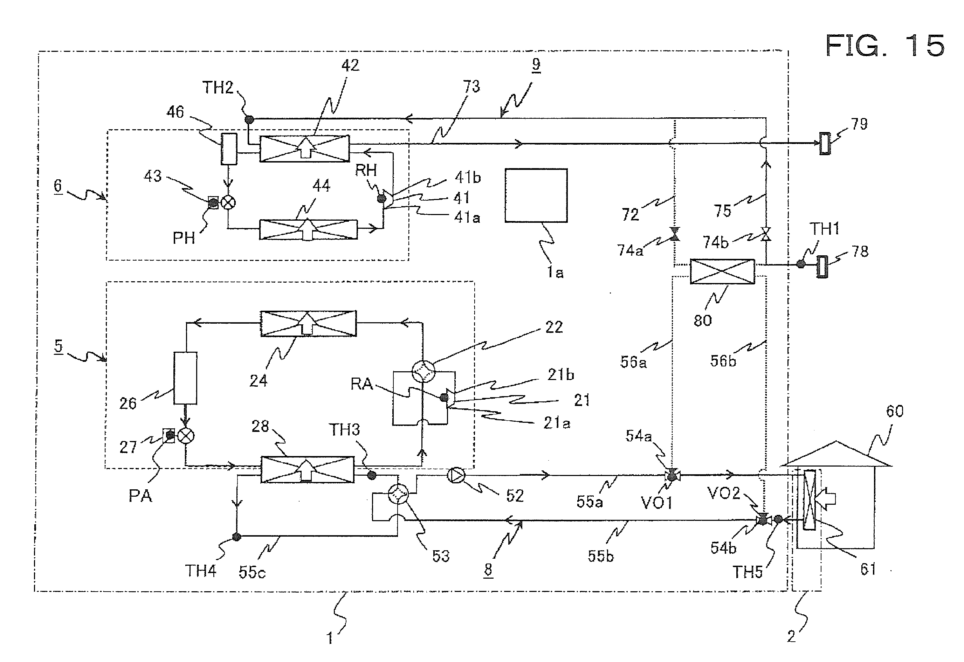

In the following, each operation mode performed in the air conditioning/hot-water supply system according to the first embodiment will be explained with reference to Figs. 15 to 17. In Figs. 15 to 17, arrows given to the heat exchanger show flows of heat, and arrows given to each circuit 5, 6, 8, 9 show directions of the fluid flowing through each circuit. Also, a white two-way valve shows that it is in an open state, and a black two-way valve shows that it is in a closed state. Also, a white three-way valve shows that all the three ports are in an open state, and a three-way valve with two white ports out of three and one remaining black port shows that the white ports are in an open state, and the block port is in a closed state. Also, arc-shaped solid lines depicted in the four-way valves show flow paths of fluid flowing through the four-way valves. Also, a path shown with a dotted line in Figs. 15 to 17 shows a path not used in an operation mode that the diagram shows, that is, a closed path.

### "Operation Mode No. 1 <Cooling/Hot-water Supply Operation>" (see Fig. 15)

In an operation mode No. 1, cooling operation by the air conditioning refrigerant circuit 5 and hot-water supply operation by the hot-water supply refrigerant circuit 6 are performed.

In the air conditioning refrigerant circuit 5, a high-temperature and high-pressure gas refrigerant discharged from a discharge port 21b of the air conditioning compressor 21 passes the four-way valve 22, and flows into the air conditioning heat source side heat exchanger 24. The high-temperature and high-pressure gas refrigerant flowing in the air conditioning heat source side heat exchanger 24 radiates heat to an outside air to be condensed and liquefied. The high-pressure liquid refrigerant flows through the air conditioning refrigerant tank 26, and then is decompressed by the air conditioning expanding valve 27 adjusted to a predetermined opening and expands to become a low-temperature and low-pressure, gas-liquid two-phase refrigerant and flow into the air conditioning use side heat exchanger 28. The gas-liquid two-phase refrigerant flowing in the air conditioning use side heat exchanger 28 absorbs heat from high-temperature cold water flowing in the air conditioning cold/hot water circulation circuit 8 to evaporate and become a low-pressure gas refrigerant. This low-pressure gas refrigerant passes the four-way valve 22, flows into a suction port 21a of the air conditioning compressor 21, and is compressed again by the air conditioning compressor 21 to become a high-temperature and high-pressure gas refrigerant.

In the air conditioning cold/hot water circulation circuit 8, the cold water having radiated heat to the air conditioning refrigerant flowing through the air conditioning use side heat exchanger 28 passes the air conditioning cold/hot water piping 55a and flows into the indoor heat exchanger 61 by driving the air conditioning cold/hot water circulation pump 52. In the indoor heat exchanger 61, cold water in the air conditioning cold/hot water circulation circuit 8 and high-temperature air in the house 60 exchange heat, and the air in the house 60 is cooled. That is, the inside of the house 60 is cooled. At this time, the cold water flowing through the indoor heat exchanger 61 absorbs heat from the air in the house 60, and temperature thereof rises. This cold water with temperature that has risen flows through the air conditioning cold/hot water piping 55b, 55c due to the air conditioning cold/hot water circulation pump 52, and while flowing through the air conditioning use side heat exchanger 28 again, exchanges heat with the air conditioning refrigerant flowing through the air conditioning refrigerant circuit 5 to be cooled.

On the other hand, in the hot-water supply refrigerant circuit 6, the gas refrigerant whose temperature and pressure have become high by being compressed by the hot-water supply compressor 41 flows into the hot-water supply use side heat exchanger 42. The high-temperature and high-pressure gas refrigerant flowing in the hot-water supply use side heat exchanger 42 radiates heat to water flowing in the hot-water supply flow path 9 to be condensed and liquefied. Then, the liquefied high-pressure refrigerant flows through the hot-water supply refrigerant tank 46, and then is decompressed by the hot-water supply expanding valve 43 adjusted to a predetermined opening, and expands to become a low-temperature and low-pressure, gas-liquid two-phase refrigerant. This gas-liquid two-phase refrigerant absorbs heat from an outside air and evaporates while flowing through the hot-water supply heat source side heat exchanger 44 to become a low-pressure gas refrigerant. This low-pressure gas refrigerant flows into a suction port 41a of the hot-water supply compressor 41, and is compressed again by the hot-water supply compressor 41 to be high temperature and high pressure.

In the hot-water supply flow path 9, the water having flowed into the water supply inlet 78 flows to the hot-water supply use side heat exchanger 42 via the hot-water supply bypass piping 75. The water having flowed into the hot-water supply use side heat exchanger 42 absorbs heat from a hot-water supply refrigerant flowing though the hot-water supply refrigerant circuit 6 in the hot-water supply use side heat exchanger 42, and turns into high-temperature hot water. This hot water flows out of a hot-water supply outlet 78 to be guided to the hot-water supply load side.

It should be noted that in the operation mode No. 1, the flow path to flow to the hot-water supply residual heat exchanger 80 in the air conditioning cold/hot water circulation circuit 8 is blocked by the three-way valves 54a, 54b. In addition, in the hot-water supply flow path 9 also, the flow path to flow to the hot-water supply residual heat exchanger 80 is blocked by the two-way valve 74a. Thus, heat exchange between the water flowing through the air conditioning cold/hot water circulation circuit 8 and the water flowing through the hot-water supply flow path 9 is not performed by the hot-water supply residual heat exchanger 80.

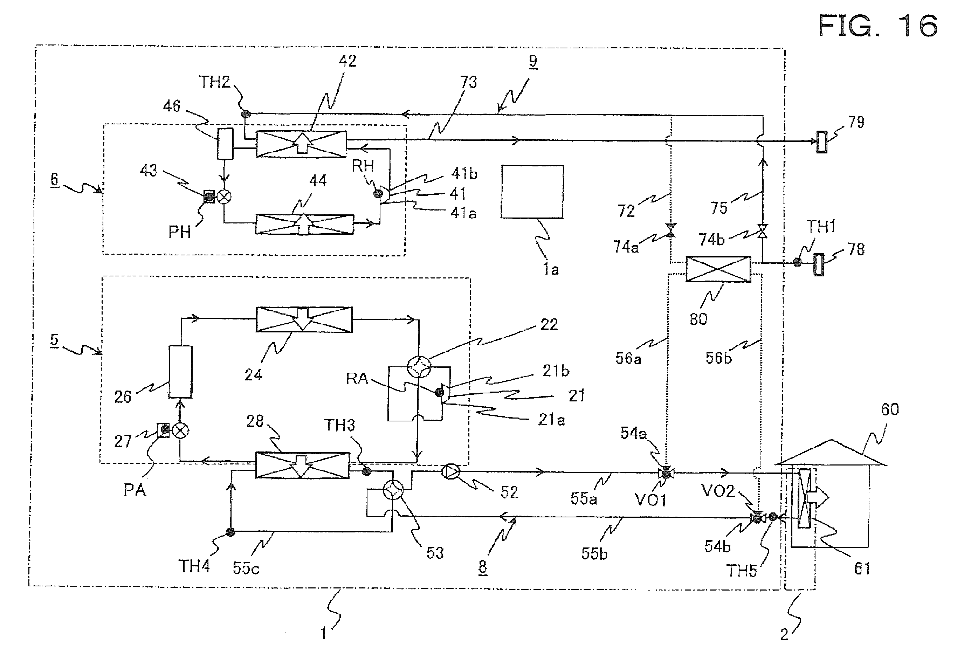

### "Operation Mode No. 2 <Heating/Hot-water Supply Operation>" (see Fig. 16)

In an operation mode No. 2, heating operation by the air conditioning refrigerant circuit 5 and hot-water supply operation by the hot-water supply refrigerant circuit 6 are performed.

In the air conditioning refrigerant circuit 5, a high-temperature and high-pressure gas refrigerant discharged from the discharge port 21b of the air conditioning compressor 21 passes the four-way valve 22, and flows into the air conditioning use side heat exchanger 28. The high-temperature and high-pressure gas refrigerant flowing in the air conditioning use side heat exchanger 28 radiates heat to hot water flowing in an air conditioning cold/hot water circuit 8 to be condensed and liquefied. This high-pressure liquid refrigerant is decompressed by the air conditioning expanding valve 27 adjusted to a predetermined opening, expands to become a low-temperature and low-pressure, gas-liquid two-phase refrigerant, passes the air conditioning refrigerant tank 26, and flows into the air conditioning heat source side heat exchanger 24. The gas-liquid two-phase refrigerant flowing in the air conditioning heat source side heat exchanger 24 absorbs heat from an outside air to evaporate and become a low-pressure gas refrigerant. This low-pressure gas refrigerant passes the four-way valve 22, flows into the suction port 21a of the air conditioning compressor 21, and is compressed again by the air conditioning compressor 21 to become a high-temperature and high-pressure gas refrigerant.

In the air conditioning cold/hot water circulation circuit 8, the hot water whose temperature has risen by absorbing heat from an air conditioning refrigerant flowing through the air conditioning use side heat exchanger 28 passes the air conditioning cold/hot water piping 55a and flows into the indoor heat exchanger 61 by driving the air conditioning cold/hot water circulation pump 52. In the indoor heat exchanger 61, hot water in the air conditioning cold/hot water circulation circuit 8 and low-temperature air in the house 60 exchange heat, and the air in the house 60 is heated. That is, the inside of the house 60 is heated. At this time, the hot water flowing though the indoor heat exchanger 61 radiates heat to the air in the house 60 to be cooled. This cooled hot water flows through the air conditioning cold/hot water piping 55b, 55c due to the air conditioning cold/hot water circulation pump 52, and while flowing through the air conditioning use side heat exchanger 28 again, exchanges heat with the air conditioning refrigerant flowing through the air conditioning refrigerant circuit 5, and accordingly temperature thereof is raised.

On the other hand, in the hot-water supply refrigerant circuit 6, a gas refrigerant whose temperature and pressure have become high by being compressed by the hot-water supply compressor 41 flows into the hot-water supply use side heat exchanger 42. The high-temperature and high-pressure gas refrigerant flowing in the hot-water supply use side heat exchanger 42 radiates heat to water flowing in the hot-water supply flow path 9 to be condensed and liquefied. Then, the liquefied high-pressure refrigerant flows through the hot-water supply refrigerant tank 46, and then is decompressed by the hot-water supply expanding valve 43 adjusted to a predetermined opening, and expands to become a low-temperature and low-pressure, gas-liquid two-phase refrigerant. This gas-liquid two-phase refrigerant absorbs heat from an outside air and evaporates while flowing through the hot-water supply heat source side heat exchanger 44 to become a low-pressure gas refrigerant. This low-pressure gas refrigerant flows into the suction port 41a of the hot-water supply compressor 41, and is compressed again by the hot-water supply compressor 41 to become a high-temperature and high-pressure gas refrigerant.

In the hot-water supply flow path 9, water having flowed into the water supply inlet 78 flows to the hot-water supply use side heat exchanger 42 via the hot-water supply bypass piping 75. Water having flowed into the hot-water supply use side heat exchanger 42 absorbs heat from the hot-water supply refrigerant flowing through the hot-water supply refrigerant circuit 6 in the hot-water supply use side heat exchanger 42, and turns into high-temperature hot water. This hot water flows out of the hot-water supply outlet 78, and is guided to the hot-water supply load side.

It should be noted that in the operation mode No. 2, the flow path to flow to the hot-water supply residual heat exchanger 80 in the air conditioning cold/hot water circulation circuit 8 is blocked by the three-way valves 54a, 54b. In addition, in the hot-water supply flow path 9, the flow path to flow to the hot-water supply residual heat exchanger 80 is blocked by the two-way valve 74a. Thus, heat exchange between the water flowing through the air conditioning cold/hot water circulation circuit 8 and the water flowing through the hot-water supply flow path 9 is not performed by the hot-water supply residual heat exchanger 80.

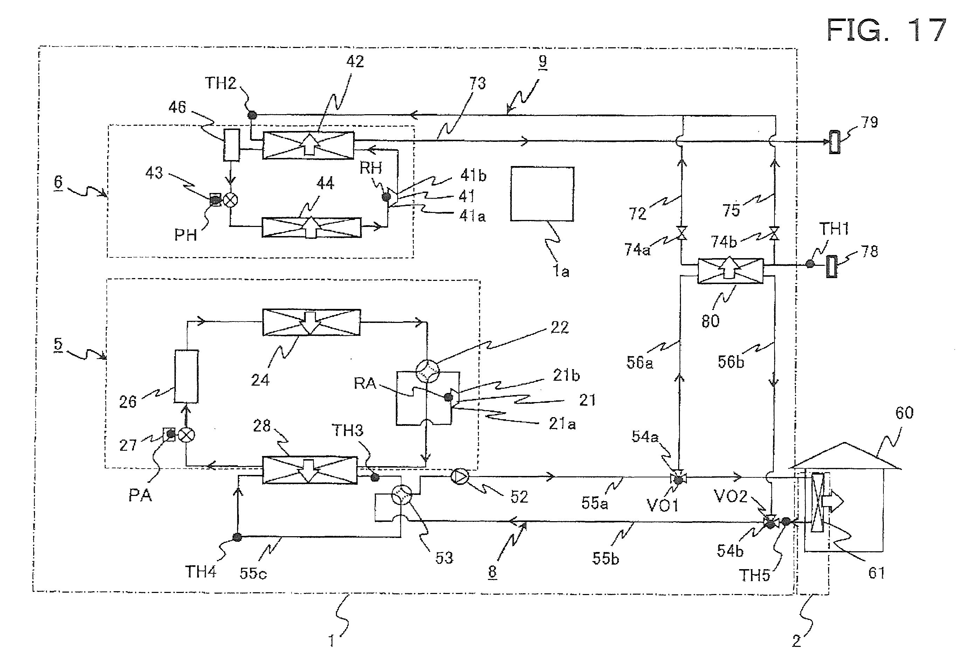

### "Operation Mode No. 3 <Heating/Hot-water Supply Assist Operation>" (see Fig. 17)

In an operation mode No. 3, heating operation by the air conditioning refrigerant circuit 5 performs the hot-water supply assist operation while bearing a part of a load on hot-water supply operation by the hot-water supply refrigerant circuit 6.

In the air conditioning refrigerant circuit 5, a high-temperature and high-pressure gas refrigerant discharged from the discharge port 21b of the air conditioning compressor 21 passes the four-way valve 22, and flows into the air conditioning use side heat exchanger 28. The high-temperature and high-pressure gas refrigerant flowing in the air conditioning use side heat exchanger 28 radiates heat to hot water flowing in the air conditioning cold/hot water circuit 8 to be condensed and liquefied. This high-pressure liquid refrigerant is decompressed by the air conditioning expanding valve 27 adjusted to a predetermined opening, expands to become a low-temperature and low-pressure, gas-liquid two-phase refrigerant, passes the air conditioning refrigerant tank 26, and flows into the air conditioning heat source side heat exchanger 24. The gas-liquid two-phase refrigerant flowing in the air conditioning heat source side heat exchanger 24 absorbs heat from an outside air to evaporate and become a low-pressure gas refrigerant. This low-pressure gas refrigerant passes the four-way valve 22, flows into the suction port 21a of the air conditioning compressor 21, and is compressed again by the air conditioning compressor 21 to become a high-temperature and high-pressure gas refrigerant.

In the air conditioning cold/hot water circulation circuit 8, hot water whose temperature has risen by absorbing heat from the air conditioning refrigerant flowing through the air conditioning use side heat exchanger 28 passes the air conditioning cold/hot water piping 55a and flows into the indoor heat exchanger 61 by driving the air conditioning cold/hot water circulation pump 52. In the indoor heat exchanger 61, hot water in the air conditioning cold/hot water circulation circuit 8 and low-temperature air in the house 60 exchange heat, and the air in the house 60 is heated. That is, the inside of the house 60 is heated. At this time, the hot water flowing through the indoor heat exchanger 61 radiates heat to the air in the house 60 to be cooled.

On the other hand, hot water branched off at the three-way valve 54a to the air conditioning cold/hot water piping 56a flows to the hot-water supply residual heat exchanger 80, and radiates heat to water flowing through the hot-water supply flow path 9 in the hot-water supply residual heat exchanger 80. Then, the hot water cooled by radiating heat passes the air conditioning cold/hot water piping 56b, enters the three-way valve 54b, merges with hot water having flowed out of the indoor heat exchanger 61, passes the air conditioning cold/hot water piping 55b, 55c due to the air conditioning cold/hot water circulation pump 52, and exchanges heat with the air conditioning refrigerant flowing through the air conditioning refrigerant circuit 5 while flowing through the air conditioning use side heat exchanger 28 again, and accordingly temperature thereof is raised.

In the hot-water supply refrigerant circuit 6, the gas refrigerant whose temperature and pressure have become high by being compressed by the hot-water supply compressor 41 flows into the hot-water supply use side heat exchanger 42. The high-temperature and high-pressure gas refrigerant flowing in the hot-water supply use side heat exchanger 42 radiates heat to water flowing in the hot-water supply flow path 9 to be condensed and liquefied. Then, the liquefied high-pressure refrigerant flows through the hot-water supply refrigerant tank 46, and then is decompressed by the hot-water supply expanding valve 43 adjusted to a predetermined opening, and expands to become a low-temperature and low-pressure, gas-liquid two-phase refrigerant. This gas-liquid two-phase refrigerant absorbs heat from an outside air and evaporates while flowing through the hot-water supply heat source side heat exchanger 44 to become a low-pressure gas refrigerant. This low-pressure gas refrigerant flows into the suction port 41a of the hot-water supply compressor 41, and is compressed again by the hot-water supply compressor 41 to become a high-temperature and high-pressure gas refrigerant.

In the hot-water supply flow path 9, water having flowed into the water supply inlet 78 divides into and flows to the hot-water supply bypass piping 75 and the hot-water supply residual heat exchanger 80. The water having flowed through the hot-water supply bypass piping 75 flows directly toward the hot-water supply use side heat exchanger 42, but water having flowed to the hot-water supply residual heat exchanger 80 absorbs heat from hot water flowing through the air conditioning cold/hot water circulation circuit 8 in the hot-water supply residual heat exchanger 80, and temperature thereof is raised. The water with raised temperature and the water having flowed from the water supply inlet 78 directly to the hot-water supply bypass piping 75 merge at a branch point downstream the outlet of the hot-water supply residual heat exchanger 80, and then flows to the hot-water supply use side heat exchanger 42. Here, temperature of water having merged at the branch point rises due to an influence of the water whose temperature has been raised by the hot-water supply residual heat exchanger 80. That is, temperature of the water flowing to the hot-water supply use side heat exchanger 42 is made higher than temperature of the water flowing through the water supply inlet 78 by the hot-water supply residual heat exchanger 80. The water having flowed into the hot-water supply use side heat exchanger 42 absorbs heat from the hot-water supply refrigerant flowing through the hot-water supply refrigerant circuit 6 in the hot-water supply use side heat exchanger 42, and turns into high temperature hot water. This hot water flows out of the hot-water supply outlet 78, and is guided to equipment on the hot-water supply load side (for example, bathtub, lavatory and the like).

In this operation mode No. 3, because the water flowing through the hot-water supply flow path 9 is warmed by the hot-water supply residual heat exchanger 80 in advance before entering the hot-water supply use side heat exchanger 42, a heat exchange amount required for heating water to a predetermined hot-water supply temperature with the hot-water supply use side heat exchanger 42 can be less. That is, a load on the hot-water supply operation performed by the hot-water supply refrigerant circuit 6 can be reduced.

On the contrary, an extra work necessary for the hot-water supply assist operation has to be done on the air conditioning cycle side. Nonetheless, in this operation mode No. 3, as explained before using Fig. 14, the power consumption can be reduced as the whole of the air conditioning/hot-water supply system.

### "Variant 1 of the Air Conditioning/Hot-water Supply System according to the First Embodiment"

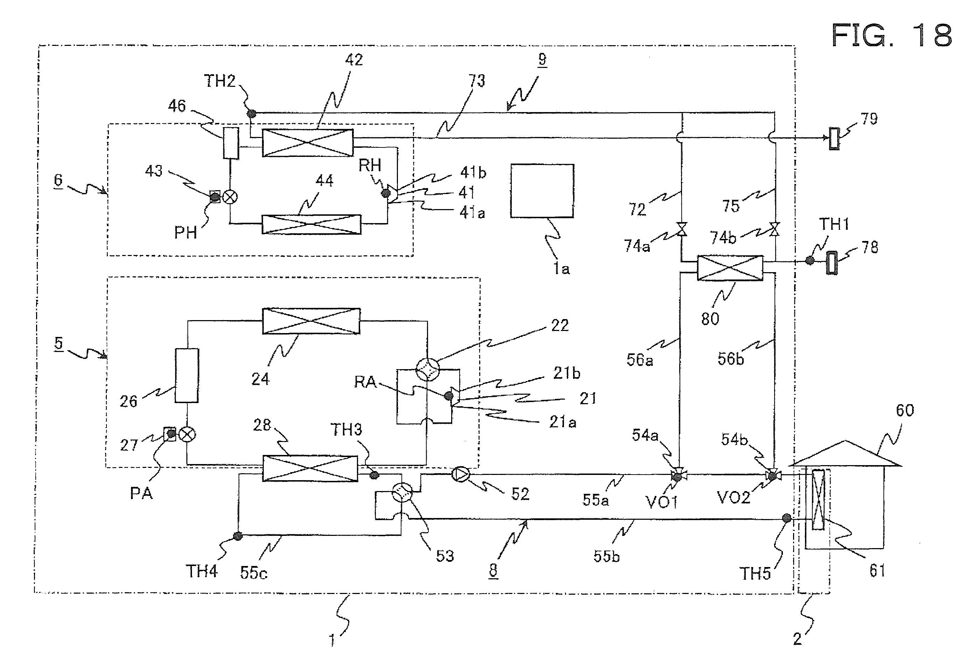

Next, a variant of the air conditioning/hot-water supply system according to the first embodiment will be explained. Although in the air conditioning/hot-water supply system according to the above-described first embodiment, the hot-water supply residual heat exchanger 80 and the indoor heat exchanger 61 are connected in parallel, in this variant, the hot-water supply residual heat exchanger 80 and the indoor heat exchanger 61 are connected in series. Hereinafter, the variant will be explained specifically using Fig. 18.

The air conditioning/hot-water supply system according to this variant 1 has a configuration that, of the two three-way valves 54a, 54b provided in air conditioning cold/hot water piping 55a in the air conditioning cold/hot water circulation circuit 8, the three-way valve 54a on the side of the air conditioning cold/hot water circulation pump 52 and the inlet of the hot-water supply heat exchanger 80 are connected by the air conditioning cold/hot water piping 56a, and the three-way valve 54b on the side of the inlet of the indoor heat exchanger 61 and the outlet of the hot-water supply heat exchanger 80 are connected by the air conditioning cold/hot water piping 56b to connect the hot-water supply residual heat exchanger 80 in series on the upstream side of the indoor heat exchanger 61 in a circulation direction of water. With this configuration, a flow path for water to flow through in the order of the hot-water supply residual heat exchanger 80 and the indoor heat exchanger 61 is formed in the air conditioning cold/hot water circulation circuit 8. It should be noted that in this variant 1, water having been sent out from the air conditioning cold/hot water circulation pump 52 can be made to flow directly to the indoor heat exchanger 61 without flowing through the hot-water supply residual heat exchanger 80 by opening and closing operation of the three-way valves 54a, 54b.

In this variant 1, because high-temperature hot water can be supplied to the hot-water supply residual heat exchanger 80 before the indoor heat exchanger 61, a load on the hot-water supply cycle can be reduced further.

### "Variant 2 of the Air Conditioning/Hot-water Supply System according to the First Embodiment"

Next, a variant 2 of the air conditioning/hot-water supply system according to the first embodiment will be explained. This variant 2 is the same with the variant 1 in that the hot-water supply residual heat exchanger 80 and the indoor heat exchanger 61 are connected in series, but is different from the variant 1 in that a connection order of the hot-water supply residual heat exchanger 80 and the indoor heat exchanger 61 is reverse to that of the variant 1. That is, the air conditioning/hot-water supply system according to the variant 2 has a configuration that the hot-water supply residual heat exchanger 80 is connected in series on the downstream side of the indoor heat exchanger 61 in a circulation direction of water. With this configuration, a flow path for water to flow through in the order of the indoor heat exchanger 61 and the hot-water supply residual heat exchanger 80 is formed in the air conditioning cold/hot water circulation circuit 8. It should be noted that an illustration of this variant 2 is omitted because the variant 2 is the same with the variant 1 except that positions where the three-way valves 54a, 54b are attached in Fig. 18 are the air conditioning cold/hot water piping 55b connected to the outlet of the indoor heat exchanger 61. In this variant 2, because high-temperature hot water can be supplied to the indoor heat exchanger 61 before the hot-water supply residual heat exchanger 80, temperature of indoor heating of the house 60 can be maintained high.

### [Second Embodiment of the Present Invention]

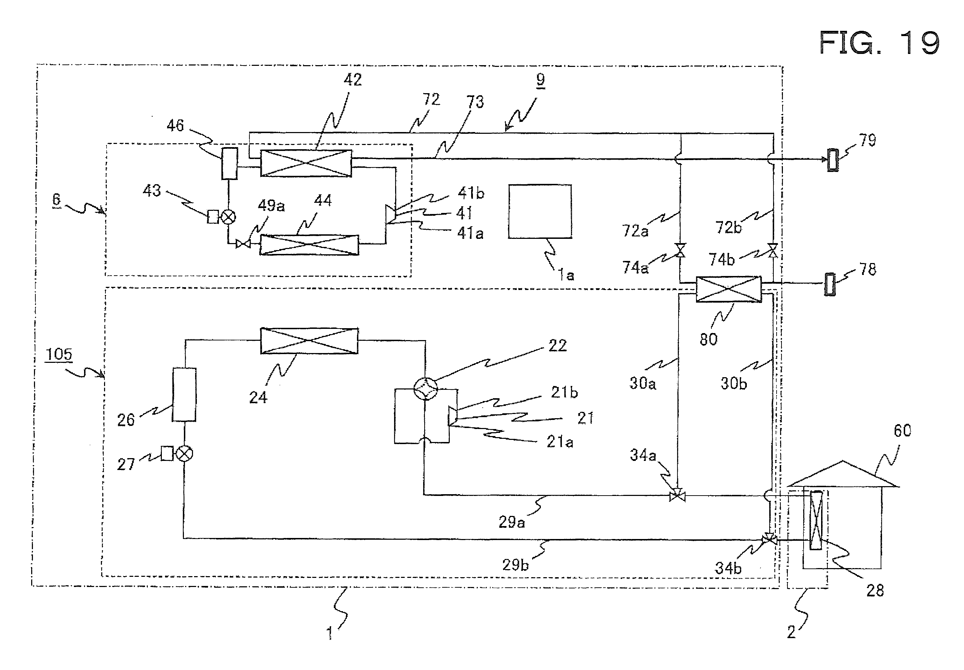

Next, an air conditioning/hot-water supply system according to a second embodiment of the present invention will be explained using Fig. 19, but a configuration identical with that of the air conditioning/hot-water supply system according to the first embodiment is given with an identical reference sign, and an explanation thereof is omitted. The air conditioning/hot-water supply system according to the second embodiment is different from the air conditioning/hot-water supply system according to the first embodiment in a circuit to which the hot-water supply residual heat exchanger 80 is connected. The difference will be explained in detail hereinafter.

An air conditioning refrigerant circuit 105 is a circuit through which an air conditioning refrigerant circulates to form a refrigerating cycle (air conditioning cycle), and is formed to be circular by connecting, with refrigerant piping, the air conditioning compressor 21 that compresses the air conditioning refrigerant, the four-way valve (air conditioning flow path switching valve) 22 that switches a flow path of the air conditioning refrigerant, the air conditioning heat source side heat exchanger 24 that exchanges heat with an outside air sent by a fan (not illustrated), the air conditioning refrigerant tank 26, the air conditioning expanding valve 27 that decompresses the air conditioning refrigerant and the air conditioning use side heat exchanger 28 that is installed in the house 60, and exchanges heat with indoor air (heat transfer medium on the air conditioning use side). Also, refrigerant piping 29a that connects the four-way valve 22 and the air conditioning use side heat exchanger 28 is provided with a three-way valve (flow rate control means, hot-water supply assisting means) 34a, and refrigerant piping 29b that connects the air conditioning expanding valve 27 and the air conditioning use side heat exchanger 28 is provided with a three-way valve (flow rate control valve, hot-water supply assisting means) 34b.

Furthermore, the hot-water supply residual heat exchanger 80 is connected to the air conditioning refrigerant circuit 105 in parallel with the air conditioning use side heat exchanger 28. Specifically, the three-way valve 34a provided at a position near the inlet of the air conditioning use side heat exchanger 28 of the refrigerant piping 29a and the inlet of the hot-water supply heat exchanger 80 are connected by refrigerant piping 30a, and the three-way valve 34b provided at a position near the outlet of the air conditioning use side heat exchanger 28 of the refrigerant piping 29b and the outlet of the hot-water supply heat exchanger 80 are connected by refrigerant piping 30b such that the air conditioning use side heat exchanger 28 and the hot-water supply residual heat exchanger 80 are in a parallel relationship in the air conditioning refrigerant circuit 105. With this configuration, two flow paths that are a flow path for the air conditioning refrigerant to flow through the air conditioning use side heat exchanger 28 and a flow path for the air conditioning refrigerant to flow through the hot-water supply residual heat exchanger 80 are formed in the air conditioning refrigerant circuit 105. The hot-water supply residual heat exchanger 80 and the three-way valves 34a, 34b correspond to the hot-water supply assisting means of the present invention. It should be noted that the hot-water supply residual heat exchanger 80 is connected to the hot-water supply flow path 9 as in the first embodiment.

With the air conditioning/hot-water supply system configured in this way, because the hot-water supply residual heat exchanger 80 can perform heat exchange between the air conditioning refrigerant and water flowing through the hot-water supply flow path 9, a part of a load on the hot-water supply operation can be borne by utilizing heat obtained in the heating operation. Therefore, by the control device 1a executing control processing explained in the air conditioning/hot-water supply system according to the first embodiment, a power consumption can be reduced as the whole of the system as in the air conditioning/hot-water supply system according to the first embodiment. It should be noted that in the air conditioning/hot-water supply system according to the second embodiment also, a configuration similar to the variant 1 and the variant 2 of the air conditioning/hot-water supply system according to the first embodiment can be adopted in a configuration of connection between the hot-water supply residual heat exchanger 80 and the air conditioning use side heat exchanger 28 according to the second embodiment.

### [Third Embodiment of the Present Invention]

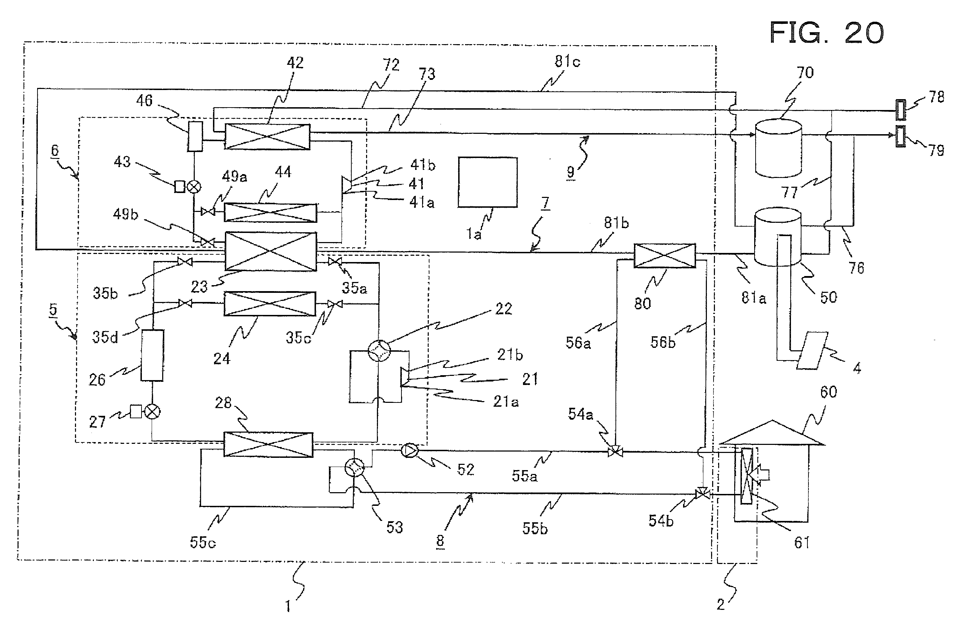

Next, an air conditioning/hot-water supply system according to a third embodiment of the present invention will be explained using Fig. 20, but a configuration identical with that of the air conditioning/hot-water supply system according to the first embodiment is given with an identical reference sign, and an explanation thereof is omitted.

The air conditioning/hot-water supply system according to the third embodiment is different from the air conditioning/hot-water supply system according to the first embodiment in that an intermediate hot water circulation circuit (intermediate heat transfer medium circuit) 7 through which water (intermediate heat transfer medium) retained in a heat storage tank 50 that can store heat circulates is included; a hot water storage tank 70 is provided to the hot-water supply flow path 9; an intermediate heat exchanger 23 is included; and the hot-water supply residual heat exchanger 80 is connected to an intermediate cold/hot water circulation circuit 7. These differences will be explained in detail hereinafter.

The intermediate hot water circulation circuit (intermediate heat transfer medium circuit) 7 is, as shown in Fig. 20, a circuit that is formed to be circular by connecting a bottom part of the heat storage tank 50 and one end of the hot-water supply residual heat exchanger 80 with intermediate hot water piping 81a, connecting the other end of the hot-water supply residual heat exchanger 80 and one end of the intermediate heat exchanger 23 with intermediate hot water piping 81b, and connecting the other end of the intermediate heat exchanger 23 and the heat storage tank 50 with intermediate hot water piping 81c. It should be noted that an unillustrated intermediate hot water circulation pump is incorporated in the intermediate hot water piping 81b.

Water in the intermediate hot water circulation circuit 7 flows to the intermediate heat exchanger 23 by driving the intermediate hot water circulation pump, and returns to the heat storage tank 50 while exchanging heat with the air conditioning refrigerant flowing through the air conditioning refrigerant circuit 5 and the hot-water supply refrigerant flowing through the hot-water supply refrigerant circuit 6 in this intermediate heat exchanger 23. Then, because a heat storage material is filled in the heat storage tank 50, heat or cold obtained from the intermediate heat exchanger 23 is stored in this heat storage tank 50. Furthermore, the heat storage tank 50 has a configuration that a solar heat collector 4 that collects solar heat is embedded therein, and thus can store solar heat.

It should be noted that water (hot water) retained in the heat storage tank 50 passes intermediate hot water piping 76, and is supplied from the hot-water supply outlet 79 to the hot-water supply load side (bathtub, lavatory and the like). Also, the water supplied from the water supply inlet 78 passes water supply piping 77, and is guided to the heat storage tank 50.

The intermediate heat exchanger 23 has a structure that allows heat exchange among three types of fluid, the air conditioning refrigerant circulating through the air conditioning refrigerant circuit 5, the hot-water supply refrigerant circulating through the hot-water supply refrigerant circuit 6, and water circulating through the intermediate hot water circulation circuit 7. Specifically, the intermediate heat exchanger 23 has a structure that an air conditioning refrigerant heat transfer tube (not illustrated) through which the air conditioning refrigerant flows and a hot-water supply refrigerant heat transfer tube (not illustrated) through which the hot-water supply refrigerant flow are joined with each other and inserted to an outer tube (not illustrated) of the intermediate hot water circulation circuit 7 through which water flows. With this configuration, exhaust heat of an air conditioning circuit 5, exhaust heat of a hot-water supply circuit 6, and heat stored in the intermediate hot water circulation circuit 7 can be used effectively mutually. It should be noted that although in the present embodiment, the air conditioning refrigerant heat transfer tube and the hot-water supply refrigerant heat transfer tube are joined by brazing, any method such as welding or winding a band around the heat transfer tubes to fix them may be adopted as long as a configuration allows thermal contact between the heat transfer tubes.

With the air conditioning/hot-water supply system configured in this way, because the hot-water supply residual heat exchanger 80 can perform heat exchange between the water flowing through the air conditioning cold/hot water circulation circuit 8 and the water flowing through the hot-water supply flow path 9, a part of a load on the hot-water supply operation can be borne by using heat obtained in the heating operation. Therefore, by the control device 1a executing control process as explained with the air conditioning/hot-water supply system according to the first embodiment, a power consumption can be reduced as the whole of the system as in the air conditioning/hot-water supply system according to the first embodiment. It should be noted that in the air conditioning/hot-water supply system according to the third embodiment also, a configuration similar to the variant 1 and the variant 2 of the air conditioning/hot-water supply system according to the first embodiment can be adopted as a configuration of connection between the hot-water supply residual heat exchanger 80 and the indoor heat exchanger 61 according to the third embodiment.

Also, because the air conditioning/hot-water supply system according to the third embodiment includes the heat storage tank 50 and the hot water storage tank 70, hot water stored in the heat storage tank 50 and the hot water storage tank 70 can be supplied at any time. In this third embodiment, effective use of thermal energy can be achieved.

### REFERENCE SIGN LIST

- 1a: control device
- 5, 105: air conditioning refrigerant circuit
- 6: hot-water supply refrigerant circuit
- 7: intermediate hot water circulation circuit (intermediate heat transfer medium circuit)
- 8: air conditioning cold/hot water circulation circuit (air conditioning heat transfer medium circulation circuit)
- 9: hot-water supply flow path
- 21: air conditioning compressor
- 22: four-way valve (air conditioning flow path switching valve)
- 24: air conditioning heat source side heat exchanger
- 27: air conditioning expanding valve
- 28: air conditioning use side heat exchanger
- 34a, 34b, 54a, 54b: three-way valve (flow rate control means, hot-water supply assisting means)
- 41: hot-water supply compressor
- 42: hot-water supply use side heat exchanger
- 43: hot-water supply expanding valve
- 44: hot-water supply heat source side heat exchanger
- 50: heat storage tank
- 60: house (air-conditioned space)
- 61: indoor heat exchanger
- 80: hot-water supply residual heat exchanger (hot-water supply assisting means)
- TH1 to TH5: temperature sensor
- RA, RH: revolution detecting sensor
- PA, PH, VO1, VO2: valve opening detecting sensor

## Claims

1. An air conditioning/hot-water supply system provided with: an air conditioning refrigerant circuit that drives an air conditioning compressor to perform cooling operation and heating operation; a hot-water supply refrigerant circuit that drives a hot-water supply compressor to perform hot-water supply operation; and a control device that performs control of operation, the air conditioning/hot-water supply system comprising:
hot-water supply assisting means for using heat occurred in the heating operation for the hot-water supply operation, wherein
the control device includes:
air conditioning load estimating means that estimates a current value of an air conditioning load;
air conditioning power consumption estimating means that estimates a current value of an air conditioning power consumption;
hot-water supply load estimating means that estimates a current value of a hot-water supply load;
hot-water supply power consumption estimating means that estimates a current value of a hot-water supply power consumption;
air conditioning load tentative determining means that determines tentatively the estimated value of the air conditioning load;
air conditioning load calculating means that calculates a new value of the air conditioning load by adding a predetermined value to the tentatively determined value of the air conditioning load;
air conditioning power consumption calculating means that calculates a new air conditioning power consumption based on the new air conditioning load;
hot-water supply load calculating means that calculates a new value of the hot-water supply load based on the estimated value of the air conditioning load, the estimated value of the hot-water supply load and the new value of the air conditioning load;
hot-water supply power consumption calculating means that calculates a new hot-water supply power consumption based on the new value of the hot-water supply load;
power consumption comparing means that compares a total estimated power consumption that is a total of the estimated value of the air conditioning power consumption and the estimated value of the hot-water supply power consumption, and a new total power consumption that is a total of the new value of the air conditioning power consumption and the new value of the hot-water supply power consumption; and
assist control means that controls action of the hot-water supply assisting means so that the new total power consumption approximates the new value of the air conditioning load when the new total power consumption is judged to be smaller than the total estimated power consumption.

2. The air conditioning/hot-water supply system according to claim 1, further comprising:
first threshold determining means that judges whether the new value of the air conditioning load is larger than a predetermined first threshold, wherein
a value of the air conditioning load to be a heating rated output or a maximum output of the air conditioning compressor is set as the predetermined first threshold, and
when the first threshold determining means judges that the new value of the air conditioning load is larger than the predetermined first threshold, the assist control means controls the action of the hot-water supply assisting means.

3. The air conditioning/hot-water supply system according to claim 1 or 2, further comprising:
second threshold determining means that judges whether the new value of the air conditioning load is larger than a predetermined second threshold, wherein
a value of the air conditioning load to be a boundary between continuous operation and intermittent operation of the air conditioning compressor is set as the predetermined second threshold, and
when the second threshold determining means judges that the new value of the air conditioning load is smaller than the predetermined second threshold, the air conditioning load calculating means calculates again a new air conditioning load by adding the predetermined value to the calculated new air conditioning load.

4. The air conditioning/hot-water supply system according to any one of claims 1 to 3, further comprising:
air conditioning target revolution determining means that determines a target revolution of the air conditioning compressor based on the new value of the air conditioning load when the new total power consumption is judged to be smaller than the total estimated power consumption, and
hot-water supply target revolution determining means that determines a target revolution of the hot-water supply compressor based on the new value of the hot-water supply load when the new total power consumption is judged to be smaller than the total estimated power consumption.

5. The air conditioning/hot-water supply system according to any one of claims 1 to 4, wherein
the air conditioning load tentative determining means includes correcting means that corrects the estimated value of the air conditioning load when the action of the hot-water supply assisting means is under control of the assist control means.

6. The air conditioning/hot-water supply system according to any one of claims 1 to 5, having:
an air conditioning heat transfer medium circulation circuit that is connected with the air conditioning refrigerant circuit to be able to exchange heat and through which a heat transfer medium on an air conditioning use side circulates; and
a hot-water supply flow path that is connected with the hot-water supply refrigerant circuit to be able to exchange heat and through which a heat transfer medium on a hot-water supply use side flows, wherein
the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on the air conditioning use side;
the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on the hot-water supply heat source side;
the air conditioning heat transfer medium circulation circuit is formed to be circular by connecting between the air conditioning use side heat exchanger and an indoor heat exchanger installed in an air-conditioned space with piping;
the hot-water supply assisting means includes:
a hot-water supply residual heat exchanger that performs heat exchange between a heat transfer medium on the air conditioning use side and a heat transfer medium on the hot-water supply use side; and
flow rate control means that controls a flow rate of the heat transfer medium on the air conditioning use side flowing to the hot-water supply residual heat exchanger;
the hot-water supply residual heat exchanger is connected to the hot-water supply flow path on an upstream side of the hot-water supply use side heat exchanger, and is connected to the air conditioning heat transfer medium circulation circuit in series or in parallel with the indoor heat exchanger; and
the assist control means controls action of the flow rate control means to approximate the new value of the air conditioning load.

7. The air conditioning/hot-water supply system according to any one of claims 1 to 5, having:
a hot-water supply flow path that is connected with the hot-water supply refrigerant circuit to be able to exchange heat and through which a heat transfer medium on a hot-water supply use side flows, wherein
the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on an air conditioning use side;
the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on a hot-water supply heat source side;
the hot-water supply assisting means includes:
a hot-water supply residual heat exchanger that performs heat exchange between an air conditioning refrigerant flowing through the air conditioning refrigerant circuit and a heat transfer medium on the hot-water supply use side; and
flow rate control means that controls a flow rate of the air conditioning refrigerant flowing to the hot-water supply residual heat exchanger;
the hot-water supply residual heat exchanger is connected to the hot-water supply flow path on an upstream side of the hot-water supply use side heat exchanger, and is connected to the air conditioning refrigerant circuit in series or in parallel with the air conditioning use side heat exchanger; and
the assist control means controls action of the flow rate control means to approximate the new value of the air conditioning load.

8. The air conditioning/hot-water supply system according to any one of claims 1 to 5, having:
an air conditioning heat transfer medium circulation circuit that is connected to the air conditioning refrigerant circuit to be able to exchange heat and through which a heat transfer medium on an air conditioning use side circulates;
a hot-water supply flow path that is connected with the hot-water supply refrigerant circuit to be able to exchange heat and through which a heat transfer medium on a hot-water supply use side circulates;
an intermediate heat transfer medium circuit through which an intermediate heat transfer medium retained in a heat storage tank that can store heat circulates; and
an intermediate heat exchanger that can exchange heat among three circuits that are the air conditioning refrigerant circuit, the hot-water supply refrigerant circuit and the intermediate heat transfer medium circuit, wherein
the air conditioning refrigerant circuit is formed to be circular by connecting, sequentially with refrigerant piping, the air conditioning compressor, an air conditioning flow path switching valve, an air conditioning heat source side heat exchanger for performing heat exchange with a heat transfer medium on an air conditioning heat source side, an air conditioning expanding valve and an air conditioning use side heat exchanger for performing heat exchange with a heat transfer medium on the air conditioning use side;
the hot-water supply refrigerant circuit is formed to be circular by connecting, sequentially with refrigerant piping, the hot-water supply compressor, a hot-water supply use side heat exchanger that performs heat exchange with a heat transfer medium on the hot-water supply use side, a hot-water supply expanding valve and a hot-water supply heat source side heat exchanger for performing heat exchange with a heat transfer medium on a hot-water supply heat source side;
the air conditioning heat transfer medium circulation circuit is formed to be circular by connecting between the air conditioning use side heat exchanger and an indoor heat exchanger installed in an air-conditioned space with piping;
the hot-water supply assisting means includes:
a hot-water supply residual heat exchanger that performs heat exchange between a heat transfer medium on the air conditioning use side and the intermediate heat transfer medium; and
flow rate control means that controls a flow rate of a heat transfer medium on the air conditioning use side flowing to the hot-water supply residual heat exchanger;
the hot-water supply residual heat exchanger is connected to the intermediate heat transfer medium circuit on an upstream side of the intermediate heat exchanger, and is connected to the air conditioning heat transfer medium circulation circuit in series or in parallel with the indoor heat exchanger; and
the assist control means controls action of the flow rate control means to approximate the new value of the air conditioning load.
